# EUROPEAN PATENT APPLICATION

(11) **EP 4 621 876 A1**
(43) Date of publication of application: **24.09.2025**
(21) Application number: 25716299.0
(22) Date of filing: 15.01.2025
(51) Int. Cl.: H01M 4/36

(54) **NEGATIVE ELECTRODE ACTIVE MATERIAL AND PREPARATION METHOD THEREFOR, NEGATIVE ELECTRODE SHEET, LITHIUM-ION BATTERY, AND ELECTRIC DEVICE**

(30) Priority: 30.01.2024 CN 202410129832
(71) Applicant: Contemporary Amperex Technology Co., Ltd., Ningde, Fujian 352100 (CN); Contemporary Amperex Technology (Hong Kong) Limited, Hong Kong (HK)
(72) Inventor: BAI, Peiming, Ningde, Fujian 352100 (CN); KANG, Meng, Ningde, Fujian 352100 (CN)
(74) Representative: Jacob, Reuben Ellis
(86) International application number: PCT/CN2025/072505
(87) International publication number: WO 2025/161964

(57) **Abstract**

The present application discloses a negative electrode active material and a preparation method therefor, a negative electrode plate, a lithium-ion battery and an electrical apparatus, wherein the lithium-ion battery comprises one or more battery cells, the battery cell comprises a negative electrode plate, the negative electrode plate comprises a negative electrode current collector and a negative electrode film layer located on at least one surface of the negative electrode current collector, the negative electrode film layer comprises a negative electrode active material, the negative electrode active material comprises a inner core and a coating layer located on at least a part of the surface of the inner core, the inner core comprises graphite, and the coating layer comprises amorphous carbon; in a cumulative distribution curve of R values of the negative electrode active material obtained in the surface scanning mode of a laser microscopic confocal Raman spectrometer, the centralization of R values is less than or equal to 2.0. The negative electrode active material provided by the present application can enable the battery to have both high energy density and good kinetic performance.

## Description

### CROSS-REFERENCE TO RELATED APPLICATIONS

The present application claims priority to Chinese Patent Application No. 202410129832.7 filed on January 30, 2024 and entitled "NEGATIVE ELECTRODE ACTIVE MATERIAL AND PREPARATION METHOD THEREFOR, AS WELL AS NEGATIVE ELECTRODE PLATE, BATTERY AND ELECTRICAL APPARATUS COMPRISING THE SAME", which is incorporated herein by reference in its entirety.

### TECHNICAL FIELD

The present application relates to a negative electrode active material and a preparation method therefor, a negative electrode plate, a lithium-ion battery and an electrical apparatus.

### BACKGROUND

With the continuous expansion of battery application fields, people's requirements for battery fast charging performance are getting higher and higher. The negative electrode is an important component of the battery, and its performance will affect the overall performance of the battery. At present, the commonly used negative electrode active material for the negative electrode is graphite, but the fast charging performance of graphite is usually not good enough. Based on this, fast charging negative electrode active materials, such as fast charging hard carbon, have been developed. The energy density of batteries assembled from fast charging hard carbon is usually not high, which limits their practical application. Therefore, how to make the battery have good fast charging performance while having high energy density is still a difficulty in current battery development. The above statements are only used to provide background information related to the present application and do not necessarily constitute prior art.

### SUMMARY OF THE INVENTION

The present application provides a negative electrode active material and a preparation method therefor, a negative electrode plate, a lithium-ion battery and an electrical apparatus, which can enable the battery to have both high energy density and good kinetic performance.

In a first aspect, the present application provides a lithium-ion battery, comprising one or more battery cells, wherein the battery cell comprises a negative electrode plate, the negative electrode plate comprises a negative electrode current collector and a negative electrode film layer located on at least one surface of the negative electrode current collector, the negative electrode film layer comprises a negative electrode active material, the negative electrode active material comprises a inner core and a coating layer located on at least a part of the surface of the inner core, the inner core comprises graphite, and the coating layer comprises amorphous carbon; in a cumulative distribution curve of R values of the negative electrode active material obtained in the surface scanning mode of a laser microscopic confocal Raman spectrometer, the centralization of R values is less than or equal to 2.0.

The inner core of the negative electrode active material comprises graphite, the coating layer comprises amorphous carbon, and the centralization of R values of the negative electrode active material is less than or equal to 2.0. If the negative electrode active material meets this condition, it means that the coating layer has better consistency and can more evenly coat the surface of the inner core, so that the negative electrode active material can be quickly intercalated with lithium ions in all directions, thereby better improving the charge exchange capacity of ions on the surface of the negative electrode active material, and further improving the kinetic performance of the negative electrode active material and the battery. Therefore, when the negative electrode active material provided in the embodiments of the present application is applied to a battery, it can enable the battery to have both high energy density and good kinetic performance.

In some embodiments, the centralization of R values of the negative electrode active material is less than or equal to 1.7. This can further improve the kinetic performance of negative electrode active materials and batteries.

In some embodiments, the coating layer comprises hard carbon.

In some embodiments, the R value R50, which corresponds to a cumulative distribution of 50%, of the negative electrode active material is 0.15-0.42, optionally 0.20-0.30. The R value of the negative electrode active material can characterize the defect level and degree of disorder of the negative electrode active material. The R value R50, which corresponds to a cumulative distribution of 50%, of the negative electrode active material being within the above range can not only improve the charge exchange capacity of ions on the surface of the negative electrode active material, but also keep the side reactions on the surface of the negative electrode active material particles at a lower level, which helps the battery to have high energy density, good kinetic performance and long cycle life.

In some embodiments, the R value R50, which corresponds to a cumulative distribution of 50%, of the inner core is less than the R value R50, which corresponds to a cumulative distribution of 50%, of the coating layer. The R value R50, which corresponds to a cumulative distribution of 50%, of the coating layer of the negative electrode active material is larger with larger degree of disorder, which can make the negative electrode active material and the battery have good kinetic performance; the R value R50, which corresponds to a cumulative distribution of 50%, of the inner core of the negative electrode active material is smaller with smaller degree of disorder, which can make the negative electrode active material as a whole have higher gram capacity and the battery have higher energy density.

In some embodiments, the R value R50, which corresponds to a cumulative distribution of 50%, of the coating layer is 0.55-1.6, optionally 1.0-1.4. When the R value R50, which corresponds to a cumulative distribution of 50%, of the coating layer is within the above range, the coating layer itself can have good kinetic performance, which can improve the kinetic performance of the negative electrode active material and the battery; it can also make the negative electrode active material have less battery side reactions, so that the battery has good cycling performance.

In some embodiments, the centralization of R values of the coating layer is 0.06-0.33, optionally 0.13-0.25. The centralization of R values of the coating layer is within the above range, which can make the centralization of R values of the negative electrode active material smaller, thereby improving the consistency of the coating layer and the charge exchange capacity of ions on the surface of the negative electrode active material, which is conductive to improving the kinetic performance of the battery.

In some embodiments, the R value R50, which corresponds to a cumulative distribution of 50%, of the inner core is 0.06-0.14, optionally 0.07-0.11. The R value R50, which corresponds to a cumulative distribution of 50%, of the inner core is within the above range, which can make the battery have both high energy density and good kinetic performance.

In some embodiments, the volume distribution particle size Dv50 of the negative electrode active material is 8µm-25µm, optionally 12µm-17µm. When the volume distribution particle size Dv50 of the negative electrode active material is within the above range, the lithium ions can have good solid-phase conductivity inside the negative electrode active material particles, and the negative electrode active material can also have smaller specific surface area, which helps the battery to have both good cycling performance and kinetic performance. When the volume distribution particle size Dv50 of the negative electrode active material is within the above range, the negative electrode slurry can also have good dispersibility.

In some embodiments, the difference value between the volume distribution particle size Dv50 of the negative electrode active material and the volume distribution particle size Dv50 of the inner core is 1.2µm-6µm, optionally 1.8µm-4.5µm. The difference value between the volume distribution particle size Dv50 of the negative electrode active material and the volume distribution particle size Dv50 of the inner core is within the above range, which can not only enhance the charge exchange capacity of ions on the surface of the negative electrode active material, but also keep the side reactions on the surface of the negative electrode active material particles at a lower level, and also make the negative electrode active material have higher gram capacity, thereby facilitating the battery to have high energy density, good kinetic performance and long cycle life.

In some embodiments, the mass of the coating layer is 0.3%-5%, optionally 1%-3.5% of the mass of the inner core. The mass proportion of the coating layer being within the above range enables the battery to have high energy density, good kinetic performance and long cycle life.

In some embodiments, the inner core has the coating layer on 90%-100% of its surface. Optionally, the inner core has the coating layer on 92%-100% of its surface. In this way, the coating layer can more evenly coat the surface of the inner core, thereby improving the charge exchange capacity of ions on the surface of the negative electrode active material, and further improving the kinetic performance of the negative electrode active material and the battery.

In some embodiments, the graphite is artificial graphite. The inner core comprises artificial graphite, which can give the battery high energy density and good cycling performance.

In some embodiments, the graphite has a secondary particle morphology. When graphite has a secondary particle morphology, the degree of isotropy of graphite increases, which facilitates the rapid intercalation of lithium ions and thus helps the battery to have good kinetic performance, and can also further improve the gram capacity of the negative electrode active material and the energy density of the battery.

In some embodiments, the intensity ratio of the 004 crystal plane diffraction peak to the 110 crystal plane diffraction peak of the graphite measured by X-ray diffraction is 2-6.5. When this value is small, the graphite is highly isotropic and graphite particles have lithium ion intercalation openings in all directions, which is conductive to rapid lithium ion intercalation and thus helps the battery to have good kinetic performance.

In some embodiments, the negative electrode active material has a gram capacity of 354mAh/g-360mAh/g.

In some embodiments, the negative electrode active material has a powder compacted density of 1.63g/cm³-1.77g/cm³ under a pressure of 20000N.

In some embodiments, the specific surface area of the negative electrode active material is 1.5m²/g-5m²/g.

In some embodiments, the negative electrode film layer comprises a first negative electrode film layer and a second negative electrode film layer located between the first negative electrode film layer and the negative electrode current collector, the thickness of the first negative electrode film layer is 30%-60% of the thickness of the negative electrode film layer, the first negative electrode film layer comprises a first negative electrode active material, the second negative electrode film layer comprises a second negative electrode active material, and the first negative electrode active material comprises any one of the foregoing negative electrode active materials.

In some embodiments, the second negative electrode active material comprises any of the foregoing negative electrode active materials, and the mass content w1 of the first negative electrode active material in the first negative electrode film layer is greater than the mass content w2 of the second negative electrode active material in the second negative electrode film layer. This can reduce the problem of floating up of the negative electrode binder during the slurry drying process and reduce the negative electrode binder content on the outer surface of the negative electrode film layer, which is conductive to the liquid phase conduction of ions inside the porous electrode of the negative electrode and the charge exchange of ions on the surface of the negative electrode active material, thereby further improving the kinetic performance of the battery.

Optionally, the mass content w1 of the first negative electrode active material in the first negative electrode film layer is greater than or equal to 96.9%, and the mass content w2 of the second negative electrode active material in the second negative electrode film layer is less than 96.9%. This enables the battery to have higher energy density.

In some embodiments, the second negative electrode active material comprises graphite, the graphite has a secondary particle morphology, and the R value R50, which corresponds to a cumulative distribution of 50%, of the graphite is 0.06-0.14.

Optionally, the mass content w1 of the first negative electrode active material in the first negative electrode film layer is greater than the mass content w2 of the second negative electrode active material in the second negative electrode film layer.

Optionally, the mass content w1 of the first negative electrode active material in the first negative electrode film layer is greater than or equal to 96.9%, and the mass content w2 of the second negative electrode active material in the second negative electrode film layer is less than 96.9%.

This can reduce the problem of floating up of the negative electrode binder during the slurry drying process and reduce the negative electrode binder content on the outer surface of the negative electrode film layer, which is conductive to the liquid phase conduction of ions inside the porous electrode of the negative electrode and the charge exchange of ions on the surface of the negative electrode active material, thereby further improving the kinetic performance of the battery.

In some embodiments, the compacted density of the negative electrode film layer is 1.60g/cm³-1.80g/cm³, optionally 1.65g/cm³-1.80g/cm³.

In some embodiments, the thickness of the negative electrode film layer is 45µm-100µm, optionally 70µm-100µm. By adjusting the thickness of the negative electrode film layer to be within the above range, the battery can have better kinetic performance while having high energy density.

In a second aspect, the present application provides an electrical apparatus, which comprises the lithium-ion battery of the first aspect of the present application, and the lithium-ion battery is used for providing electric energy.

The electrical apparatus of the present application comprises the lithium-ion battery provided by the present application, and thus has at least the same advantages as those of the lithium-ion battery.

In a third aspect, the present application provides a negative electrode active material, the negative electrode active material comprises a inner core and a coating layer located on at least a part of the surface of the inner core, the inner core comprises graphite, and the coating layer comprises amorphous carbon; in a cumulative distribution curve of R values of the negative electrode active material obtained in the surface scanning mode of a laser microscopic confocal Raman spectrometer, the centralization of R values is less than or equal to 2.0.

In a fourth aspect, the present application provides a method for preparing a negative electrode active material, comprising the following steps: providing graphite; subjecting the graphite and a liquid-phase coating agent to solid-liquid fusion; carbonizing the product of the solid-liquid fusion under a protective gas atmosphere so that the liquid-phase coating agent is carbonized into amorphous carbon and coats at least a part of the surface of the graphite to obtain a negative electrode active material, wherein the negative electrode active material comprises a inner core and a coating layer located on at least a part of the surface of the inner core, the inner core comprises graphite, and the coating layer comprises amorphous carbon; in a cumulative distribution curve of R values of the negative electrode active material obtained in the surface scanning mode of a laser microscopic confocal Raman spectrometer, the centralization of R values is less than or equal to 2.0.

In the preparation method provided in the embodiments of the present application, a liquid-phase coating agent is used to undergo solid-liquid fusion with graphite. Since the liquid-phase coating agent has good fluidity, it can be evenly distributed on the surface of the graphite particles, thereby improving the consistency of the coating layer while making the centralization of R values of the negative electrode active material smaller. This can improve the charge exchange capacity of ions on the surface of the negative electrode active material and improve the kinetic performance of the negative electrode active material and the battery. Therefore, the negative electrode active material prepared by the preparation method provided in the embodiments of the present application can enable the battery to have both high energy density and good kinetic performance.

In some embodiments, the liquid-phase coating agent is a liquid-phase hard carbon coating agent.

In some embodiments, the liquid-phase hard carbon coating agent comprises a liquid resin, the viscosity of the liquid resin at 25°C is 150mPa·s-2500mPa·s, and the solid content of the liquid resin is 50%-88%.

Optionally, the viscosity of the liquid resin at 25°C is 300mPa·s-950mPa·s, and the solid content of the liquid resin is 60%-85%.

The viscosity of the liquid resin is within the above range, which can make the liquid resin have good fluidity and diffusivity, as well as good curing effect and coating effect. Therefore, the liquid resin can be evenly dispersed on the surface of the graphite particles, so as to make the consistency of the coating layer better and the centralization of R values of the negative electrode active material smaller, thereby better improving the kinetic performance of the negative electrode active material and the battery.

The solid content of the liquid resin is within the above range, which can make the liquid resin have good fluidity and diffusivity, as well as good curing effect and coating effect. Therefore, the liquid resin can be evenly dispersed on the surface of the graphite particles, so as to make the consistency of the coating layer better and the centralization of R values of the negative electrode active material smaller, thereby better improving the kinetic performance of the negative electrode active material and the battery.

In some embodiments, the liquid resin comprises at least one of liquid phenolic resin, liquid epoxy resin, liquid vinyl ester resin, liquid unsaturated polyester resin, liquid furan resin, and their respective derivatives.

In some embodiments, the liquid-phase hard carbon coating agent comprises liquid phenolic resin, the liquid phenolic resin has a weight average molecular weight of 300-900, a solid content of 60%-85%, a free phenol mass content of less than or equal to 9%, and a free aldehyde mass content of less than or equal to 0.5%.

Optionally, the liquid phenolic resin has a weight average molecular weight of 500-700, a solid content of 70%-78%, a free phenol mass content of less than or equal to 6.5%, and a free aldehyde mass content of 0.

Compared with other liquid resins, the hard carbon formed by carbonization and coking of liquid phenolic resin itself has better performance, which can make the centralization of R values of the negative electrode active material smaller, thereby better improving the kinetic performance of the negative electrode active material and the battery.

The weight average molecular weight of the liquid phenolic resin is within the above range, which can make the liquid phenolic resin have good fluidity and diffusivity, as well as good curing effect and coating effect. Therefore, the liquid phenolic resin can be evenly dispersed on the surface of the graphite particles, so as to make the consistency of the coating layer better and the centralization of R values of the negative electrode active material smaller, thereby better improving the kinetic performance of the negative electrode active material and the battery.

The mass content of free phenol in the liquid phenolic resin is within the above range, which can reduce the escape of free phenol during carbonization, reduce local defects on the surface of the coating layer, and reduce the specific surface area of the negative electrode active material. This can improve the consistency of the coating layer, improve the particle consistency of the negative electrode active material, and reduce the centralization of R values of the negative electrode active material, thereby better improving the kinetic performance of the negative electrode active material and the battery.

In some embodiments, the carbonization comprises a heating stage, a holding stage and a cooling stage. The heating rate in the carbonization heating stage is 1.3°C/min-3°C/min, optionally 1.5°C/min-2.5°C/min. A slow heating rate is used during carbonization, which can fully solidify the liquid-phase hard carbon coating agent and evenly distribute the liquid-phase hard carbon coating agent on the surface of the graphite particles, thereby making the coating layer more consistent and the R value of the negative electrode active material less concentrated, which can improve the kinetic performance of the negative electrode active material and the battery.

In some embodiments, the cooling rate of the carbonization cooling stage is 1.2°C/min-3.7°C/min, optionally 1.5°C/min-2.7°C/min. Using a slow cooling rate during carbonization can reduce the problem of excessive agglomeration of the finished particles.

In some embodiments, the holding temperature of the carbonization holding stage is 900°C-1500°C; and/or the holding time of the carbonization holding stage is 2h-10h.

In some embodiments, the device for solid-liquid fusion of the graphite and the liquid-phase hard carbon coating agent is a fusion machine, and the stirring speed of the fusion machine is 300r/min-1000r/min; and/or the stirring time for solid-liquid fusion is 3min-8min.

As the stirring speed of the fusion machine increases, the distribution uniformity of the liquid-phase hard carbon coating agent on the surface of the graphite particles is improved.

As the stirring time for solid-liquid fusion increases, the distribution uniformity of the liquid-phase hard carbon coating agent on the surface of the graphite particles is improved.

In a fifth aspect, the present application provides a negative electrode plate, the negative electrode plate comprises a negative electrode current collector and a negative electrode film layer located on at least one surface of the negative electrode current collector, the negative electrode film layer comprises a negative electrode active material, the negative electrode active material comprises a inner core and a coating layer located on at least a part of the surface of the inner core, the inner core comprises graphite, and the coating layer comprises amorphous carbon; in a cumulative distribution curve of R values of the negative electrode active material obtained in the surface scanning mode of a laser microscopic confocal Raman spectrometer, the centralization of R values is less than or equal to 2.0.

### BRIEF DESCRIPTION OF DRAWINGS

In order to more clearly illustrate the technical solution of the embodiments of the present application, the drawings required for use in the embodiments of the present application are briefly introduced below. Apparently, the drawings described below are merely some embodiments of the present application. For those of ordinary skills in the art, other drawings may also be obtained based on these drawings without making creative work.
Fig. 1 is a schematic diagram of a battery cell provided in some embodiments of the present application.
Fig. 2 is a schematic diagram of a battery module provided in some embodiments of the present application.
Fig. 3 is a schematic diagram of a battery pack provided in some embodiments of the present application.
Fig. 4 is an exploded schematic diagram of the battery pack shown in Fig. 3.
Fig. 5 is an exploded schematic diagram of a battery cell provided in some embodiments of the present application.
Fig. 6 is a schematic diagram of an electrical apparatus provided in some embodiments of the present application.

The accompanying drawings may not be drawn to actual scale.

The description of reference numerals is as follows: 1. battery pack; 2. upper box; 3. lower box; 4. battery module; 5. battery cell; 51. case; 52. electrode assembly; 53. cover plate.

### DETAILED DESCRIPTION

Hereinafter, embodiments that specifically disclose the negative electrode active material and preparation method therefor, negative electrode plate, lithium-ion battery and electrical apparatus of the present application will be described in detail with reference to the drawings as appropriate. However, there may be cases where unnecessary detailed description is omitted. For example, there are cases where detailed descriptions of well-known items and repeated descriptions of actually identical structures are omitted. This is to avoid unnecessary redundancy in the following descriptions and to facilitate understanding by those skilled in the art. In addition, the drawings and subsequent descriptions are provided for those skilled in the art to fully understand the present application, and are not intended to limit the subject matter recited in the claims.

"Ranges" disclosed in the present application are defined in the form of lower limits and upper limits, a given range is defined by the selection of a lower limit and an upper limit, and the selected lower limit and upper limit define boundaries of a particular range. A range defined in this manner may be inclusive or exclusive of end values, and may be arbitrarily combined, that is, any lower limit may be combined with any upper limit to form a range. For example, if the ranges of 60-120 and 80-110 are listed for a particular parameter, it is understood that the ranges of 60-110 and 80-120 are also contemplated. Additionally, if the minimum range values 1 and 2 are listed, and if the maximum range values 3, 4 and 5 are listed, the following ranges are all contemplated: 1-3, 1-4, 1-5, 2- 3, 2-4 and 2-5. In the present application, unless stated otherwise, the numerical range "a-b" represents an abbreviated representation of any combination of real numbers between a to b, where both a and b are real numbers. For example, the numerical range "0-5" means that all the real numbers between "0-5" have been listed herein, and "0-5" is just an abbreviated representation of combinations of these numerical values. In addition, when a parameter is expressed as an integer greater than or equal to 2, it is equivalent to disclosing that the parameter is, for example, an integer of 2, 3, 4, 5, 6, 7, 8, 9, 10, 11, 12, and the like.

Unless otherwise specifically stated, all embodiments and optional embodiments of the present application may be combined with each other to form new technical solutions, and such technical solutions should be considered as being included in the disclosure of the present application.

Unless otherwise specifically stated, all technical features and optional technical features of the present application may be combined with each other to form new technical solutions, and such technical solutions should be considered as being included in the disclosure of the present application.

Unless otherwise specified, all steps of the present application may be performed sequentially or randomly, and preferably sequentially. For example, the method comprises steps (a) and (b), which means that the method may comprise steps (a) and (b) performed sequentially, or may comprise steps (b) and (a) performed sequentially. For example, the reference to the fact that the method may further comprise step (c) means that step (c) may be added to the method in any order, for example, the method may comprise steps (a), (b) and (c), or may comprise steps (a), (c) and (b), or may comprise steps (c), (a) and (b), and so on.

In the present application, the terms "a plurality of' and "multiple" refer to two or more.

Unless otherwise stated, the terms used herein have the well-known meanings commonly understood by those skilled in the art.

Unless otherwise specified, the values of the parameters mentioned in the present application can be measured by various test methods commonly used in the art, for example, they can be measured according to the test methods given in the embodiments of the present application. Unless otherwise stated, all parameters are tested at 25°C.

The battery mentioned in the embodiments of the present application may be a single physical module comprising one or more battery cells to provide higher voltage and capacity. For example, the battery mentioned in the present application may include a battery cell, a battery module, or a battery pack, etc.

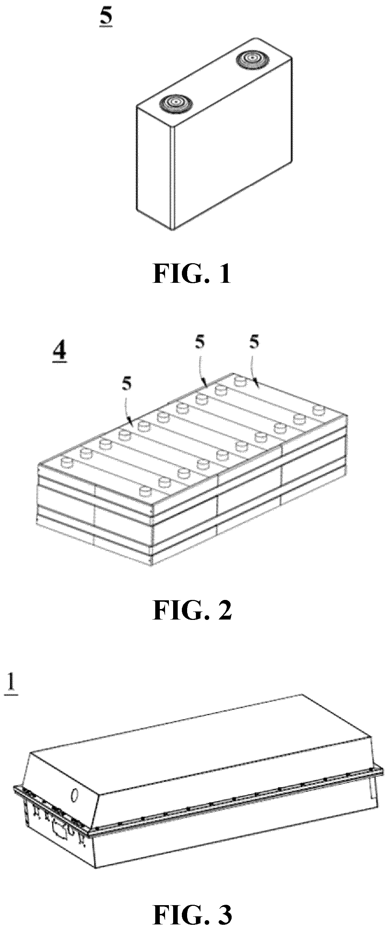

The battery cell is the smallest unit that makes up a battery, which is capable of achieving the charging and discharging functions alone. The battery cell may be in a cylindrical shape, a cuboid shape or another shape, which is not limited in the embodiments of the present application. For example, Fig. 1 shows a battery cell 5 with a cuboid structure as an example.

When there are a plurality of battery cells, the plurality of battery cells are connected in series, in parallel or in series and parallel through bus components. In some embodiments, the battery may be a battery module; when there are a plurality of battery cells, the plurality of battery cells are arranged and fixed to form a battery module. In some embodiments, the battery may be a battery pack. The battery pack comprises a box and a battery cell. The battery cell or the battery module is accommodated in the box. In some embodiments, the box may be a part of a vehicle chassis structure. For example, a part of the box may become at least a part of the floor of a vehicle, or a part of the box may become at least a part of a cross beam and a longitudinal beam of a vehicle.

In some embodiments, the battery may be an energy storage apparatus. The energy storage apparatus comprises an energy storage container, or an energy storage cabinet, etc.

In some embodiments, the battery cell can be assembled into a battery module, the number of battery cells included in the battery module can be multiple, and the specific number can be adjusted according to the application and capacity of the battery module. Fig. 2 is a schematic diagram of a battery module 4 as an example. As shown in Fig. 2, in the battery module 4, a plurality of battery cells 5 can be sequentially arranged along the length direction of the battery module 4. Of course, any other arrangements are also possible. The plurality of battery cells 5 may further be fixed by fasteners.

Optionally, the battery module 4 may further include a shell having an accommodating space, in which the plurality of battery cells 5 are accommodated.

In some embodiments, the aforementioned battery modules can further be assembled into a battery pack, and the number of battery modules included in the battery pack can be adjusted according to the application and capacity of the battery pack.

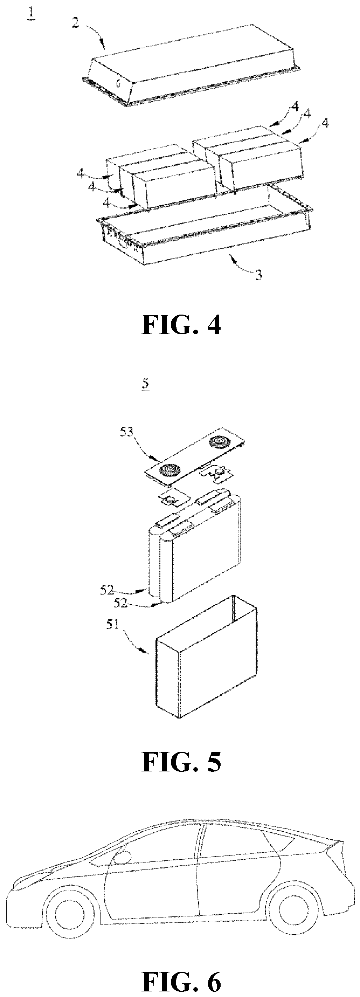

Figs. 3 and 4 are schematic diagrams of a battery pack 1 as an example. As shown in Figs. 3 and 4, the battery pack 1 may include a box and a plurality of battery modules 4 disposed in the box. The box comprises an upper box 2 and a lower box 3, wherein the upper box 2 is used to cover the lower box 3 to form an enclosed space for accommodating the battery modules 4. The plurality of battery modules 4 may be arranged in the box in any manner.

The battery provided in the embodiments of the present application may include a lithium-ion battery.

The battery cell comprises an electrode assembly and an electrolyte. The electrode assembly may be of a wound structure or a stacked structure, which is not limited in the embodiments of the present application.

The battery cell may also include an outer package, and the outer package can be used to encapsulate the electrode assembly and electrolyte. The outer package may be a hard case, such as a hard plastic case, an aluminum case, or a steel case. The outer package may also be a soft pack, such as a bag-type soft pack. The material of the soft package can be plastic, such as one or more of polypropylene (PP), polybutylene terephthalate (PBT) and polybutylene succinate (PBS).

In some embodiments, as shown in Fig. 5, the outer package may include a case 51 and a cover plate 53. The case 51 comprises a bottom plate and a side plate connected to the bottom plate, where the bottom plate and the side plate enclose to form an accommodating cavity. The case 51 has an opening that communicates with the accommodating cavity, and the cover plate 53 is used for covering the opening to close the accommodating cavity. The electrode assembly 52 is encapsulated in the accommodating cavity. The number of electrode assemblies 52 contained in the battery cell 5 can be one or more, and can be adjusted according to requirements.

The electrode assembly usually comprises a positive electrode plate and a negative electrode plate. The negative electrode is the electrode where lithium ions are absorbed or intercalated during charging and released or de-intercalated during discharging. The positive electrode is the electrode where lithium ions are released or de-intercalated during charging and absorbed or intercalated during discharging. The positive electrode plate comprises a positive electrode active material, and the negative electrode plate comprises a negative electrode active material.

When the battery is charged, the electrochemical process occurring at the negative electrode can be roughly divided into the following 3 steps: (1) the liquid phase conduction process of ions inside the porous electrode of the negative electrode, including the liquid phase diffusion process and the electrical migration process; (2) the charge exchange process of ions on the surface of the negative electrode active material; (3) the solid phase conduction process of ions inside the negative electrode active material particles.

The charge exchange ability of ions on the surface of the negative electrode active material is very important for achieving fast charging. Fast charging, FC for short, refers to charging the battery to a full or nearly full state in a short period of time. If the battery is charged and the time it takes to charge the battery from 0% SOC to 100% SOC is recorded, the time can be used to characterize the fast charging performance of the battery. The shorter the time, the better the fast charging capability of the battery. For example, if the time is around 20 min (with an error of no more than 1 min), it is generally considered to be a 3 C fast charging battery. For another example, if the time is around 15 min (with an error of no more than 1 min), it is generally considered to be a 4 C fast charging battery.

The negative electrode active material commonly used at present is graphite, but the kinetic performance of graphite is not excellent enough. A layer of amorphous carbon material coats the surface of graphite, the amorphous carbon material has a high degree of disorder, which is conducive to the deintercalation of lithium ions, thereby improving the kinetic performance of the negative electrode active material to a certain extent. However, the kinetic performance of the negative electrode active materials currently prepared still cannot meet the current demand for high-rate and fast charging of batteries, and needs to be further improved.

In view of this, an embodiment of the present application provides a negative electrode active material, and the kinetic performance of the negative electrode active material can be improved by optimizing the performance of the inner core and the coating layer.

The negative electrode active material comprises a inner core and a coating layer located on at least a part of the surface of the inner core, the inner core comprises graphite, the coating layer comprises amorphous carbon, and in a cumulative distribution curve of R values of the negative electrode active material obtained in the surface scanning mode of a laser microscopic confocal Raman spectrometer, the centralization of R values is less than or equal to 2.0.

In the present application, the R value of the negative electrode active material, inner core, and coating layer refers to the ratio of peak height of D-band to G-band of their Raman spectra. The D-band is at 1350±50cm⁻¹, and the G-band is at 1585±50cm⁻¹. The R value can characterize the defect level and degree of disorder of the carbon materials. The larger the value, the greater the defect level and degree of disorder of the carbon materials.

The Raman spectra of the carbon materials can be obtained by a laser microscopic confocal Raman spectrometer, and the laser wavelength can be 532nm. During the test, a suitable amount of sample can be taken to perform an all-round scan on its surface. The scanning area is 100µm×100µm, the step length is 2µm, and the total number of scanning points is 2500 points, thereby obtaining the R values at different positions and the R value cumulative distribution curve.

The centralization of R values is expressed by (R90-R10)/R50, where R90 is the R value with cumulative distribution of 90% from the lower limit, R10 is the R value with cumulative distribution of 10% from the lower limit, and R50 is the R value with cumulative distribution of 50% from the lower limit. That is, the 2500 R values obtained are arranged in ascending order, R10 is the R value corresponding to the 10th% number in order, R50 is the R value corresponding to the 50th% number in order, and R90 is the R value corresponding to the 90th% number in order. The testing instrument can be a high-precision Renishaw laser microscopic confocal Raman spectrometer.

The negative electrode active material sample can be obtained by sampling during the battery preparation process, or by disassembling the sample from the prepared battery. For example, the battery cell can be discharged (for safety reasons, the battery cell is generally in a fully discharged state); the negative electrode plate is taken out after the battery cell is disassembled, and the negative electrode plate is soaked in dimethyl carbonate for a certain period of time (for example, 2h-10h); the negative electrode plate is then taken out and dried at a certain temperature for a certain period of time (for example, 60°C, more than 4h), and the negative electrode plate is taken out after drying; the dried negative electrode plate is baked at a certain temperature for a certain period of time (for example, 400°C, more than 2h), and any region of the baked negative electrode plate is selected to sample the negative electrode active material (a blade can be used to scrape the powder for sampling); the collected negative electrode active material is ground and sieved (for example, sieved with a 200-mesh sieve) to obtain a negative electrode active material sample that can be used for testing.

The inner core material sample can be obtained by sampling during the process of preparing the negative electrode active material.

The R value of the coating layer and the centralization of R value refer to the properties of the amorphous carbon material itself formed by carbonizing the precursor compound used to prepare the coating layer material. The coating layer material sample can be obtained as follows: take an appropriate amount of a precursor compound for preparing the coating layer material (such as the liquid-phase coating agent described below), and perform carbonization under the same carbonization conditions as those for preparing the negative electrode active material coating layer, and then grind and sieve the obtained material to obtain a coating layer material sample.

The centralization of R values of the negative electrode active material is small, the R value has narrow distribution width and good centralization.

The inner core of the negative electrode active material comprises graphite, the coating layer comprises amorphous carbon, and the centralization of R values of the negative electrode active material is less than or equal to 2.0. If the negative electrode active material meets this condition, it means that the coating layer has better consistency and can more evenly coat the surface of the inner core, so that the negative electrode active material can be quickly intercalated with lithium ions in all directions, thereby better improving the charge exchange capacity of ions on the surface of the negative electrode active material, and further improving the kinetic performance of the negative electrode active material and the battery. The negative electrode active material has good kinetic performance, and the negative electrode is not prone to lithium plating problems when the battery is charged fast. Therefore, when the negative electrode active material provided in the embodiments of the present application is applied to a battery, it can enable the battery to have both high energy density and good kinetic performance.

Optionally, the centralization of R values of the negative electrode active material may be less than or equal to 1.8, less than or equal to 1.7, less than or equal to 1.6, less than or equal to 1.5, or less than or equal to 1.4.

This can further improve the kinetic performance of negative electrode active materials and batteries.

The critical charging rate of the battery of the present application without lithium plating is greater than or equal to 3.4C, that is, the battery of the present application is a fast charging battery above 3.4C, and the time for the battery to charge from 0% SOC to 100% SOC is within 17.65 min, which can better meet the current demand for fast charging.

By further defining the R value of the negative electrode active material, the inner core, and the coating layer, at least one of the energy density, kinetic performance, and cycling performance of the battery can be improved.

In some embodiments, the coating layer includes hard carbon.

In some embodiments, the R value R50, which corresponds to a cumulative distribution of 50%, of the negative electrode active material can be 0.15-0.42, for example, 0.15, 0.18, 0.20, 0.22, 0.24, 0.26, 0.28, 0.30, 0.32, 0.34, 0.36, 0.38, 0.40, 0.42, or a range consisting of any of the above values. Optionally, the R value R50, which corresponds to a cumulative distribution of 50%, of the negative electrode active material may be 0.20-0.42, 0.20-0.4, 0.20-0.38, 0.20-0.36, 0.20-0.34, 0.20-0.32, 0.20-0.30.

The R value of the negative electrode active material can characterize the defect level and degree of disorder of the negative electrode active material. The R value R50, which corresponds to a cumulative distribution of 50%, of the negative electrode active material is related to the R value with cumulative distribution of 50% of the inner core, the R value with cumulative distribution of 50% of the coating layer, the thickness of the coating layer, the uniformity of the coating layer, and the like. For example, when other conditions are the same, the larger the R value with cumulative distribution of 50% of the inner core, the larger the R value R50, which corresponds to a cumulative distribution of 50%, of the negative electrode active material; the larger the thickness of the coating layer, the larger the R value R50, which corresponds to a cumulative distribution of 50%, of the negative electrode active material.

It can be understood that with the same centralization of R values of the negative electrode active material, the larger the R value R50, which corresponds to a cumulative distribution of 50%, of the negative electrode active material, the higher the defect level of the negative electrode active material, the faster the charge exchange of ions on the surface of the negative electrode active material, and the better the kinetic performance of the negative electrode active material and the battery. However, due to the high defect level of the negative electrode active material, side reactions on the surface of the negative electrode active material, such as side reactions at the negative electrode-electrolyte interface, will increase, which will increase the irreversible capacity loss and reduce the capacity retention rate after cycling.

The R value R50, which corresponds to a cumulative distribution of 50%, of the negative electrode active material being within the above range can not only improve the charge exchange capacity of ions on the surface of the negative electrode active material, but also keep the side reactions on the surface of the negative electrode active material particles at a lower level, which helps the battery to have high energy density, good kinetic performance and long cycle life.

In some embodiments, the R value R50, which corresponds to a cumulative distribution of 50%, of the inner core is less than the R value R50, which corresponds to a cumulative distribution of 50%, of the coating layer.

The R value R50, which corresponds to a cumulative distribution of 50%, of the coating layer of the negative electrode active material is larger with larger degree of disorder, which can make the negative electrode active material and the battery have good kinetic performance; the R value R50, which corresponds to a cumulative distribution of 50%, of the inner core of the negative electrode active material is smaller with smaller degree of disorder, which can make the negative electrode active material as a whole have higher gram capacity and the battery have higher energy density.

The R value R50, which corresponds to a cumulative distribution of 50%, of the coating layer and the centralization of R value refer to the properties of the amorphous carbon material such as hard carbon material itself formed by carbonizing the precursor compound used to prepare the coating layer material.

In some embodiments, the R value R50, which corresponds to a cumulative distribution of 50%, of the coating layer can be 0.55-1.6, for example, 0.55, 0.7, 0.8, 0.9, 1.0, 1.04, 1.08, 1.11, 1.14, 1.17, 1.22, 1.25, 1.29, 1.32, 1.35, 1.4, 1.5, 1.6, or a range consisting of any of the above values. Optionally, the R value R50, which corresponds to a cumulative distribution of 50%, of the coating layer may be 0.8-1.4, 1.0-1.4.

When the R value R50, which corresponds to a cumulative distribution of 50%, of the coating layer is within the above range, the coating layer itself can have good kinetic performance, which can improve the kinetic performance of the negative electrode active material and the battery; it can also make the negative electrode active material have less battery side reactions, so that the battery has good cycling performance.

In some embodiments, the centralization of R values of the coating layer can be 0.06-0.33, for example, 0.06, 0.08, 0.10, 0.13, 0.16, 0.18, 0.20, 0.22, 0.24, 0.26, 0.28, 0.30, 0.33, or a range consisting of any of the above values. Optionally, the centralization of R values of the coating layer may be 0.06-0.30, 0.10-0.25, or 0.13-0.25.

The centralization of R values of the coating layer is within the above range, which can make the centralization of R values of the negative electrode active material smaller, thereby improving the consistency of the coating layer and the charge exchange capacity of ions on the surface of the negative electrode active material, which is conductive to improving the kinetic performance of the battery.

In some embodiments, the R value R50, which corresponds to a cumulative distribution of 50%, of the inner core can be 0.06-0.14, for example, 0.06, 0.07, 0.08, 0.09, 0.10, 0.11, 0.12, 0.13, 0.14, or a range consisting of any of the above values. Optionally, the R value R50, which corresponds to a cumulative distribution of 50%, of the inner core may be 0.07-0.11.

The larger the R value R50, which corresponds to a cumulative distribution of 50%, of the inner core, the better the kinetic performance of the negative electrode active material; the smaller the R value R50, which corresponds to a cumulative distribution of 50%, of the inner core, the higher the gram capacity of the negative electrode active material. The R value R50, which corresponds to a cumulative distribution of 50%, of the inner core is within the above range, which can make the battery have both high energy density and good kinetic performance.

In some embodiments, the mass of the coating layer can be 0.3%-5% of the mass of the inner core, for example, 0.3%, 0.5%, 1%, 1.5%, 2%, 2.5%, 3%, 3.5%, 4%, 4.5%, 5%, or a range consisting of any of the above values. Optionally, the mass of the coating layer may be 1%-3.5% of the mass of the inner core.

The mass of the coating layer will affect the thickness of the coating layer, and will also affect the R value R50, which corresponds to a cumulative distribution of 50%, and the centralization of R values of the negative electrode active material.

Coating the inner core with a coating layer can reduce the contact between the inner core and the electrolyte, thereby reducing the phenomenon of co-intercalation of the electrolyte solvent during the cycle, thereby improving the cycling performance of the battery; when the thickness of the coating layer continues to increase, due to the large number of pores in the coating layer itself, the side reactions at the negative electrode-electrolyte interface increase, thereby increasing the irreversible capacity loss and causing a certain degree of decline in the cycling performance of the battery.

When the mass proportion of the coating layer is within the above range, the consistency of the coating layer can be better, thereby improving the charge exchange capacity of ions on the surface of the negative electrode active material; when the mass proportion of the coating layer is within the above range, the side reactions on the surface of the negative electrode active material particles can be kept at a lower level, so that the negative electrode active material has a higher gram capacity. Therefore, the mass proportion of the coating layer being within the above range enables the battery to have high energy density, good kinetic performance and long cycle life.

In some embodiments, the difference value between the volume distribution particle size Dv50 of the negative electrode active material and the volume distribution particle size Dv50 of the inner core can be 1.2µm-6µm, for example, 1.2µm, 1.5µm, 1.8µm, 2.2µm, 2.4µm, 2.6µm, 2.8µm, 3µm, 3.2µm, 3.4µm, 3.6µm, 3.8µm, 4µm, 4.2µm, 4.5µm, 5µm, 6µm, or a range consisting of any of the above values. Optionally, the difference value between the volume distribution particle size Dv50 of the negative electrode active material and the volume distribution particle size Dv50 of the inner core may be 1.8µm-4.5µm, 2.2µm-4µm.

The difference value between the volume distribution particle size Dv50 of the negative electrode active material and the volume distribution particle size Dv50 of the inner core is within the above range, which can not only enhance the charge exchange capacity of ions on the surface of the negative electrode active material, but also keep the side reactions on the surface of the negative electrode active material particles at a lower level, and also make the negative electrode active material have higher gram capacity, thereby facilitating the battery to have high energy density, good kinetic performance and long cycle life.

In some embodiments, the inner core has the coating layer on 90%-100% of its surface, optionally, the inner core has the coating layer on 92%-100% of its surface, and more optionally, the inner core has the coating layer on 94%-100% of its surface. In this way, the coating layer can more evenly coat the surface of the inner core, thereby improving the charge exchange capacity of ions on the surface of the negative electrode active material, and further improving the kinetic performance of the negative electrode active material and the battery.

In some embodiments, the volume average particle size Dv50 of the negative electrode active material may be 8µm-25µm, optionally 12µm-17µm. When the volume distribution particle size Dv50 of the negative electrode active material is within the above range, the lithium ions can have good solid-phase conductivity inside the negative electrode active material particles, and the negative electrode active material can also have smaller specific surface area, which helps the battery to have both good cycling performance and kinetic performance. When the volume distribution particle size Dv50 of the negative electrode active material is within the above range, the negative electrode slurry can also have good dispersibility.

The volume distribution particle size Dv50 of a material has a well-known meaning in the art, which indicates the particle size corresponding to the cumulative volume distribution percentage of the material reaching 50%, and can be measured using instruments and methods known in the art. For example, it can be conveniently determined using a laser particle size analyzer with reference to GB/T 19077-2016 Particle Size Distribution - Laser Diffraction. The testing instrument may be a Mastersizer 3000 laser particle size analyzer produced by Malvern Instruments Ltd., UK.

The graphite is artificial graphite. The inner core comprises artificial graphite, which can give the battery high energy density and good cycling performance.

In some embodiments, the graphite may have a secondary particle morphology. When graphite has a secondary particle morphology, the degree of isotropy of graphite increases, which facilitates the rapid intercalation of lithium ions and thus helps the battery to have good kinetic performance, and can also further improve the gram capacity of the negative electrode active material and the energy density of the battery.

In some embodiments, the intensity ratio of the 004 crystal plane diffraction peak to the 110 crystal plane diffraction peak of graphite measured by X-ray diffraction may be 2-6.5.

The intensity ratio of the 004 crystal plane diffraction peak to the 110 crystal plane diffraction peak of graphite measured by X-ray diffraction can indicate the degree of isotropy of graphite. When this value is small, the graphite is highly isotropic and graphite particles have lithium ion intercalation openings in all directions, which is conductive to rapid lithium ion intercalation and thus helps the battery to have good kinetic performance.

For example, the intensity ratio C(004)/C(110) of the diffraction peak of the 004 crystal plane to the diffraction peak of the 110 crystal plane determined by X-ray diffraction of graphite can be tested using an X-ray diffractometer (such as Bruker D8 Discover) with reference to JIS K 0131-1996 and JB/T 4220-2011 to obtain an X-ray diffraction pattern of the powder sample. C(004)/C(110) represents the ratio of the integrated area of the diffraction peak of the 004 crystal plane to the integrated area of the diffraction peak of the 110 crystal plane in the powder sample. In the X-ray diffraction analysis test, a copper target can be used as an anode target, CuKα ray can be used as a radiation source, the ray wavelength λ=1.5418Å, the scanning 2θ angle range is 20°-80°, and the scanning rate is 4°/min.

In some embodiments, the negative electrode active material may have a gram capacity of 354mAh/g-360mAh/g.

The gram capacity of the negative electrode active material can be obtained by assembling button batteries and conducting charge and discharge tests. Exemplarily, the negative electrode active material sample can be mixed with conductive agent Super P, binder polyvinylidene fluoride (PVDF) in a mass ratio of 91.6:1.8:6.6 in solvent N-methyl pyrrolidone (NMP) to prepare a slurry; the prepared slurry is applied on a copper foil current collector, and then dried in an oven and cold pressed for later use, with the compacted density being controlled to be 1.4g/cm³-1.6g/cm³; then, a metal lithium sheet is used as the counter electrode, a polyethylene film is used as the separator, an electrolyte solution is injected, to assemble a CR2430 button battery in an argon-protected glove box. The electrolyte formula used is as follows: ethylene carbonate (EC), ethyl methyl carbonate (EMC), and diethyl carbonate (DEC) are mixed in a volume ratio of 1:1:1, and then fully dried lithium salt LiPF₆ is dissolved in the mixed solvent in a ratio of 1 mol/L to prepare an electrolyte solution. At 25°C, the obtained button battery is left to stand for 12 h, then discharged at a constant current of 0.05C to 0.005V, left to stand for 10 min, and then discharged at a constant current of 50µA to 0.005V, left to stand for 10 min, and then discharged at a constant current of 10µA to 0.005V, and the sum of the three discharge capacities is taken as the first-cycle discharge capacity of the button battery; then the button battery is charged at a constant current of 0.1C to 2.0V, and the first-cycle charging capacity of the button battery is recorded. The ratio of the first cycle charging capacity of the button battery to the mass of the negative electrode active material sample is the gram capacity of the negative electrode active material.

In some embodiments, the negative electrode active material may have a powder compacted density of 1.63g/cm³-1.77g/cm³, optionally 1.73g/cm³-1.77g/cm³ under a pressure of 20000N.

Exemplarily, a proper amount of negative electrode active material powder is placed in a special mold for compaction, the mold is placed on a compacted density instrument, different pressures are set, the thickness of the powder under different pressures is read on the device (here is the thickness after pressure relief), and the powder compacted density ρ of the negative electrode active material under the corresponding pressure is calculated through ρ=m/(s*h). During the test, the pressure is set to be 20000N. m represents the mass of the negative electrode active material powder sample, in g. s is the bottom area of the special mold for compaction, which is 1.327cm² here. h is the compacted thickness of the negative electrode active material powder sample, in cm.

In some embodiments, the specific surface area of the negative electrode active material may be 1.5m²/g-5m²/g.

When the specific surface area of the negative electrode active material is within the above range, the negative electrode-electrolyte interface side reactions can be reduced, the irreversible consumption of lithium ions can be reduced, and thus the cycle life of the battery can be improved.

The specific surface area of materials has the meaning well known in the art, and can be determined by instruments and methods well known in the art. For example, the test can be carried out using the nitrogen adsorption specific surface area analysis test method with reference to GB/T 19587-2017, and the results can be calculated using the BET (Brunauer Emmett Teller) method. The nitrogen adsorption specific surface area analysis test can be performed using the Tri-Star 3020 specific surface area pore size analysis tester from Micromeritics, USA.

The embodiments of the present application further provide a method for preparing a negative electrode active material, which can prepare the negative electrode active material provided in the embodiments of the present application.

The preparation method comprises the following steps: providing graphite; carrying out solid-liquid fusion of graphite and a liquid-phase coating agent; and carbonizing the product obtained after solid-liquid fusion under a protective gas atmosphere so that the liquid-phase coating agent is carbonized into amorphous carbon and coats at least a part of the surface of the graphite to obtain a negative electrode active material. The negative electrode active material comprises a inner core and a coating layer located on at least a part of the surface of the inner core, the inner core comprises graphite, the coating layer comprises amorphous carbon, and in a cumulative distribution curve of R values of the negative electrode active material obtained in the surface scanning mode of a laser microscopic confocal Raman spectrometer, the centralization of R values is less than or equal to 2.0.

In the preparation method provided in the embodiments of the present application, a liquid-phase coating agent is used to undergo solid-liquid fusion with graphite. Since the liquid-phase coating agent has good fluidity, it can be evenly distributed on the surface of the graphite particles, thereby improving the consistency of the coating layer while making the centralization of R values of the negative electrode active material smaller. This can improve the charge exchange capacity of ions on the surface of the negative electrode active material and improve the kinetic performance of the negative electrode active material and the battery.

Therefore, the negative electrode active material prepared by the preparation method provided in the embodiments of the present application can enable the battery to have both high energy density and good kinetic performance.

In some embodiments, the liquid-phase coating agent is a liquid-phase hard carbon coating agent.

Solid-liquid fusion of graphite and a liquid-phase hard carbon coating agent is carried out; and the solid-liquid fusion product is carbonized under a protective gas atmosphere so that the liquid-phase hard carbon coating agent is carbonized into hard carbon and coats at least a part of the surface of the graphite to obtain a negative electrode active material. The negative electrode active material comprises a inner core and a coating layer located on at least a part of the surface of the inner core, the inner core comprises graphite, the coating layer comprises hard carbon, and in a cumulative distribution curve of R values of the negative electrode active material obtained in the surface scanning mode of a laser microscopic confocal Raman spectrometer, the centralization of R values is less than or equal to 2.0.

In some embodiments, the liquid-phase hard carbon coating agent comprises a liquid resin, and the liquid resin is a hard carbon precursor material. When the coating layer comprises hard carbon, the negative electrode active material and the battery can have better kinetic performance.

The liquid resin can be commercially available, or can be synthesized according to methods known in the art, or can be obtained by mixing resin powder with a solvent and stirring them evenly.

In some embodiments, the viscosity of the liquid resin at 25°C may be 150mPa·s-2500mPa·s, for example, 150mPa·s, 200mPa·s, 300mPa·s, 400mPa·s, 500mPa·s, 600mPa·s, 700mPa·s, 800mPa·s, 850mPa-s, 950mPa·s, 1050mPa·s, 1200mPa·s, 1400mPa·s, 1600mPa·s, 1800mPa·s, 2000mPa·s, 2250mPa·s, 2500mPa·s, or a range consisting of any of the above values. Optionally, the viscosity of the liquid resin at 25°C may be 300mPa·s-950mPa·s.

The viscosity of the liquid resin can be tested with reference to GB/T 14074-2017. The test temperature is 25°C and the test device may be a NDJ-1 type rotational viscometer.

The viscosity of the liquid resin is within the above range, which can make the liquid resin have good fluidity and diffusivity, as well as good curing effect and coating effect. Therefore, the liquid resin can be evenly dispersed on the surface of the graphite particles, so as to make the consistency of the coating layer better and the centralization of R values of the negative electrode active material smaller, thereby better improving the kinetic performance of the negative electrode active material and the battery.

In some embodiments, the solid content of the liquid resin may be 50%-88%, optionally 60%-85%.

The solid content of the liquid-phase hard carbon coating agent can be tested by the oven drying method with reference to GB/T 14074-2017. The free components and water in the liquid-phase hard carbon coating agent will volatilize at high temperature. The solid content of the liquid-phase hard carbon coating agent refers to the percentage of the remaining mass to the total mass after drying under specified conditions. The oven temperature is set to be 150°C for baking to constant weight.

The solid content of the liquid resin is within the above range, which can make the liquid resin have good fluidity and diffusivity, as well as good curing effect and coating effect. Therefore, the liquid resin can be evenly dispersed on the surface of the graphite particles, so as to make the consistency of the coating layer better and the centralization of R values of the negative electrode active material smaller, thereby better improving the kinetic performance of the negative electrode active material and the battery.

In some embodiments, the liquid resin may include at least one of liquid phenolic resin, liquid epoxy resin, liquid vinyl ester resin, liquid unsaturated polyester resin, liquid furan resin, and their respective derivatives. Derivatives usually refer to products derived from the replacement of hydrogen atoms or atomic groups in polymers by other atoms or atomic groups.

The liquid resin is a good hard carbon precursor material. As a liquid-phase hard carbon coating agent, it can better improve the kinetic performance of the battery and also make the battery have good cycling performance.

In some embodiments, the liquid-phase hard carbon coating agent comprises liquid phenolic resin, the liquid phenolic resin may have a weight average molecular weight of 300-900, a solid content of 60%-85%, a free phenol mass content of less than or equal to 9%, and a free aldehyde mass content of less than or equal to 0.5%.

Optionally, the liquid phenolic resin may have a weight average molecular weight of 500-700, a solid content of 70%-78%, a free phenol mass content of less than or equal to 6.5%, and a free aldehyde mass content of less than or equal to 0.2%.

Optionally, the liquid phenolic resin may have a weight average molecular weight of 500-700, a solid content of 70%-78%, a free phenol mass content of less than or equal to 6.5%, and a free aldehyde mass content of 0.

The weight average molecular weight of liquid phenolic resin can be tested by gel permeation chromatography. The test instrument may be an Agilent 1290 Infinity II GPC system. The eluent may be tetrahydrofuran, and polystyrene standards are used for calibration.

The content of free phenol in liquid phenolic resin can be tested with reference to GB/T 30773-2014.

The free aldehyde content in liquid phenolic resin can be tested by potentiometric titration with reference to GB/T 32684-2016.

Compared with other liquid resins, the hard carbon formed by carbonization and coking of liquid phenolic resin itself has better performance, which can make the centralization of R values of the negative electrode active material smaller, thereby better improving the kinetic performance of the negative electrode active material and the battery.

The weight average molecular weight of the liquid phenolic resin is within the above range, which can make the liquid phenolic resin have good fluidity and diffusivity, as well as good curing effect and coating effect. Therefore, the liquid phenolic resin can be evenly dispersed on the surface of the graphite particles, so as to make the consistency of the coating layer better and the centralization of R values of the negative electrode active material smaller, thereby better improving the kinetic performance of the negative electrode active material and the battery.

Free phenol is a small molecule, which can easily escape during carbonization and form local defects on the surface of the coating layer.

The mass content of free phenol in the liquid phenolic resin is within the above range, which can reduce the escape of free phenol during carbonization, reduce local defects on the surface of the coating layer, and reduce the specific surface area of the negative electrode active material. This can improve the consistency of the coating layer, improve the particle consistency of the negative electrode active material, and reduce the centralization of R values of the negative electrode active material, thereby better improving the kinetic performance of the negative electrode active material and the battery.

The liquid phenolic resin can be a phenolic compound, an aldehyde compound, etc., which is formed by condensation in the presence of an alkaline catalyst. The condensation reaction starts to generate a liquid. The liquid phenolic resin mentioned in the embodiments of the present application is resol.

The phenolic compound may include one or more of phenol, cresol, dimethylphenol, nonylphenol, bisphenol A, bisphenol F, resorcinol, propylphenol, ethylphenol, and cardanol, optionally phenol. The aldehyde compound may include one or more of formaldehyde, acetaldehyde, butyraldehyde, paraformaldehyde, and furfural, optionally formaldehyde. The base catalyst may include one or more of sodium hydroxide, potassium hydroxide, barium hydroxide, calcium hydroxide, magnesium hydroxide, ammonia water, sodium carbonate, and tertiary amine.

In some embodiments, the coking value of the liquid-phase hard carbon coating agent may be 35%-50%, optionally 38%-48%.

When the coking value of the liquid-phase hard carbon coating agent is within the above range, a larger amount of the liquid-phase hard carbon coating agent can be used for solid-liquid fusion, thereby making the liquid-phase hard carbon coating agent evenly dispersed on the surface of the graphite particles, making the consistency of the coating layer better and the centralization of R values of the negative electrode active material smaller, thereby improving the kinetic performance of the negative electrode active material and the battery.

The coking value of a liquid-phase hard carbon coating agent refers to the percentage of the mass of residual carbon left after a certain mass of the liquid-phase hard carbon coating agent sample is heated under specified conditions to the mass of the liquid-phase hard carbon coating agent sample, and can be tested with reference to GB/T 8727-2008.

In some embodiments, the mass of the liquid-phase hard carbon coating agent can be 1%-10% of the mass of graphite, for example, 1%, 1.8%, 2.5%, 3.5%, 4%, 5%, 6%, 7%, 8%, 9%, 10%, or a range consisting of any of the above values. Optionally, the mass of the liquid-phase hard carbon coating agent may be 3.5%-7% of the mass of graphite.

As the mass proportion of the liquid-phase hard carbon coating agent increases, the R value R50, which corresponds to a cumulative distribution of 50%, of the negative electrode active material increases, and the degree of disorder of the surface of the negative electrode active material particles increases.

When the mass proportion of the liquid-phase hard carbon coating agent is within the above range, more of the surface of the inner core can have the coating layer, thereby improving the consistency of the coating layer and the charge exchange capacity of ions on the surface of the prepared negative electrode active material. It can also keep the side reactions on the surface of the prepared negative electrode active material particles at a lower level, thereby making the prepared negative electrode active material have higher gram capacity, which helps the battery to have high energy density, good kinetic performance and long cycle life.

In some embodiments, the device for solid-liquid fusion of graphite and liquid-phase coating agent may be a fusion machine.

Optionally, the stirring speed of the fusion machine can be 300r/min-1000r/min, for example, 300r/min, 350r/min, 400r/min, 450r/min, 500r/min, 550r/min, 600r/min, 650r/min, 700r/min, 750r/min, 800r/min, 850r/min, 900r/min, 1000r/min, or a range consisting of any of the above numerical values.

As the stirring speed of the fusion machine increases, the distribution uniformity of the liquid-phase coating agent, such as the liquid-phase hard carbon coating agent, on the surface of the graphite particles is improved, and the consistency of the coating layer is improved; however, too fast a stirring speed may break the structure of the graphite and may also cause the loss of the liquid-phase coating agent, such as the liquid-phase hard carbon coating agent. For example, part of the liquid-phase hard carbon coating agent may adhere to the inner wall of the fusion machine.

Optionally, the stirring time for solid-liquid fusion can be 3min-8min, for example, 3min, 4min, 5min, 6min, 7min, 8min, or a range consisting of any of the above values.

As the stirring time for solid-liquid fusion increases, the distribution uniformity of liquid-phase coating agents, such as liquid-phase hard carbon coating agents, on the surface of graphite particles is improved, and the consistency of the coating layer is improved; however, if the stirring time is too long, the improvement effect is not obviously increased and energy consumption is increased.

In some examples, the carbonization device may be a track kiln.

The carbonization comprises a heating stage, a holding stage and a cooling stage.

In some embodiments, the holding temperature of the carbonization holding stage can be 900°C-1500°C, for example, 900°C, 1000°C, 1050°C, 1100°C, 1150°C, 1200°C, 1250°C, 1300°C, 1350°C, 1400°C, 1500°C, or a range consisting of any of the above values. Optionally, the holding temperature of the carbonization holding stage can be 1050°C-1350°C.

In some embodiments, the holding time of the carbonization holding stage can be 2h-10h, for example, 2h, 3h, 4h, 5h, 6h, 7h, 8h, 9h, 10h, or a range consisting of any of the above values. Optionally, the holding time of the carbonization holding stage can be 5h-8h. The holding time of carbonization refers to the residence time at the holding temperature.

In some embodiments, the heating rate of the carbonization heating stage may be 1.3°C/min-3°C/min, optionally 1.5°C/min-2.5°C/min.

A slow heating rate is used during carbonization, which can fully solidify the liquid-phase coating agent, such as the liquid-phase hard carbon coating agent and evenly distribute the liquid-phase coating agent, such as the liquid-phase hard carbon coating agent on the surface of the graphite particles, thereby making the coating layer more consistent and the R value of the negative electrode active material less concentrated, which can improve the kinetic performance of the negative electrode active material and the battery. When the heating rate of the carbonization is too slow, the improvement effect on the uniformity of the distribution of the liquid-phase coating agent such as the liquid-phase hard carbon coating agent on the graphite surface is not obviously increased, and the energy consumption is increased.

In some embodiments, the cooling rate of the carbonization cooling stage may be 1.2°C/min-3.7°C/min, optionally 1.5°C/min-2.7°C/min.

Using a slow cooling rate during carbonization can reduce the problem of excessive agglomeration of the finished particles. When the cooling rate of the carbonization is too slow, energy consumption will increase.

In some embodiments, the preparation method may further include the steps of: depolymerizing, screening and demagnetizing the carbonized material.

Depolymerization can be carried out in a depolymerizer. It can eliminate the weak adhesion on the surface of the coating layer and reduce the problem of excessive agglomeration of the finished particles. Screening can reduce the content of large particles and fine powder in the finished product, thereby facilitating the acquisition of the desired particle size and particle size distribution. Demagnetization can reduce the content of magnetic impurities in the finished product. Magnetic impurities will increase the self-discharge of the battery and reduce battery performance.

In some embodiments, the method for preparing graphite may include the following steps: providing a coke raw material; crushing, shaping and grading the coke raw material to obtain aggregate; mixing the obtained aggregate with a binder and sequentially performing granulation and graphitization to obtain graphite.

The particle size of coke raw materials is usually relatively large, and the particle size of coke raw materials can be reduced by crushing. After crushing, the surface of the coke raw material is uneven, and shaping can make the coke raw material particles themselves more rounded. The grading process can reduce the content of particles that are too large and those that are too small, and can further adjust the particle size and particle size distribution of the coke raw material.

Optionally, the coke raw material may include one or more of petroleum-based non-needle coke, petroleum-based needle coke, coal-based non-needle coke, and coal-based needle coke. Needle coke is an anisotropic material, which is conductive to reducing the degree of disorder of the inner core material, improving the gram capacity of the inner core material and the overall gram capacity of the negative electrode active material; non-needle coke can reduce the C(004)/C(110) value of the inner core material and improve the kinetic performance of the negative electrode active material.

Optionally, the mass of the binder may be 6%-12%, optionally 8%-10% of the mass of the aggregate obtained through the grading process. This can make the graphite have good secondary particle morphology.

Optionally, the binder may include asphalt.

The device used for the granulation process may include either a horizontal reactor or a vertical reactor.

Optionally, the granulation process may adopt a stepwise heating and holding process. This can make the graphite have good secondary particle morphology and high capacity.

Optionally, 2-4 programmed heating platforms can be set during the heating process.

The device used for graphitization may include any one of an Acheson type graphitization furnace, a box type furnace or a lengthwise furnace.

Optionally, the temperature of the graphitization can be 2800°C-3600°C, for example, 2800°C, 2900°C, 3000°C, 3100°C, 3200°C, 3300°C, 3400°C, 3500°C, 3600°C, or a range consisting of any of the above values. More optionally, the temperature of the graphitization may be 2800°C-3200°C. The specific time of graphitization can be reasonably selected according to the device used.

The higher the graphitization temperature and the longer the graphitization time, the higher the specific capacity and the smaller the degree of disorder of graphite, and smaller the R value R50, which corresponds to a cumulative distribution of 50%, of graphite. By selecting the appropriate graphitization temperature, the battery can have both high energy density and good kinetic performance.

### [Negative electrode plate]

The battery cell comprises a negative electrode plate.

The negative electrode plate comprises a negative current collector, and a negative electrode film layer located on at least one surface of the negative current collector. For example, the negative electrode current collector has two opposite surfaces in the direction of its own thickness, and the negative electrode film layer is provided on either or both of the two opposite surfaces of the negative electrode current collector.

In some embodiments, the negative electrode current collector may include a metal foil, a three-dimensional porous current collector or a composite current collector. As examples of the metal foil, copper foil, copper alloy foil, nickel foil, nickel alloy foil, aluminum foil, and aluminum alloy foil can be used. As examples of the three-dimensional porous current collector, copper mesh, nickel mesh, foamy copper, foamy nickel, and foamy aluminum may be used. The composite current collector may include a high molecular material substrate layer and a metal material layer formed on at least one surface of the high molecular material substrate layer. As an example, the metal material may include but is not limited to one or more of copper, copper alloy, nickel, nickel alloy, titanium, titanium alloy, aluminum, aluminum alloy, silver and silver alloy. As an example, the high molecular material substrate layer may include but is not limited to one or more of polypropylene (PP), polyethylene terephthalate (PET), polybutylene terephthalate (PBT), polystyrene (PS) and polyethylene (PE).

The negative electrode film layer comprises the negative electrode active material mentioned above or the negative electrode active material prepared by the above preparation method. This enables the battery to have both high energy density and good kinetic performance.

In some embodiments, the negative electrode film layer may also comprise other negative electrode active materials well known in the art. For example, other negative electrode active materials include, but are not limited to one or more of natural graphite, artificial graphite, soft carbon, hard carbon, silicon-based materials, tin-based materials, and lithium titanate.

In some embodiments, the negative electrode film layer further optionally comprises a negative electrode conductive agent. As an example, the negative electrode conductive agent can include but is not limited to one or more of superconducting carbon, conductive graphite, acetylene black, carbon black, Ketjen black, carbon dots, carbon nanotubes, graphene and carbon nanofibers.

In some embodiments, the negative electrode film layer further optionally comprises a negative electrode binder. By way of example, the negative electrode binder may include but is not limited to one or more of styrene butadiene rubber (SBR), water-soluble unsaturated resin SR-1B, water-based acrylic resin (such as polyacrylic acid (PAA), polymethacrylic acid (PMAA), and sodium polyacrylate (PAAS)), polyacrylamide (PAM), polyvinyl alcohol (PVA), sodium alginate (SA) and carboxymethyl chitosan (CMCS).

In some embodiments, the negative electrode film layer further optionally comprises other auxiliaries. As an example, other auxiliaries may include but are not limited to thickeners (e.g. sodium carboxymethyl cellulose (CMC)), PTC thermistor materials and the like.

In some embodiments, the thickness of the negative electrode film layer may be 45µm-100µm, optionally 55µm-100µm, 70µm-100µm. The thickness of the negative electrode film layer is the thickness of the negative electrode film layer on one side of the negative electrode current collector. The thickness of the negative electrode film layer can be measured with a micrometer.

The thickness of the negative electrode film layer is related to the ion intercalation rate and the polarization size of the negative electrode, so its thickness will affect the kinetic performance of the negative electrode plate. Generally, the thicker the negative electrode film layer is, the more difficult it is for ions to diffuse in the liquid phase inside the negative electrode porous electrode under the same conditions.

By adjusting the thickness of the negative electrode film layer to be within the above range, the battery can have better kinetic performance while having high energy density.

In some embodiments, the negative electrode film layer comprises a first negative electrode film layer and a second negative electrode film layer located between the first negative electrode film layer and the negative electrode current collector, the thickness of the first negative electrode film layer is 30%-60% of the thickness of the negative electrode film layer, and the thickness of the second negative electrode film layer is 70%-40% of the thickness of the negative electrode film layer. Optionally, the thickness of the first negative electrode film layer is 30%-40% of the thickness of the negative electrode film layer, and the thickness of the second negative electrode film layer is 70%-60% of the thickness of the negative electrode film layer.

The first negative electrode film layer comprises a first negative electrode active material, the second negative electrode film layer comprises a second negative electrode active material, and the first negative electrode active material comprises the above-mentioned negative electrode active material or the negative electrode active material prepared by the above-mentioned preparation method. This enables the battery to have both high energy density and good kinetic performance.

Optionally, in some embodiments, the second negative electrode active material may include the above-mentioned negative electrode active material or the negative electrode active material prepared by the above-mentioned preparation method, the mass content w1 of the first negative electrode active material in the first negative electrode film layer is greater than the mass content w2 of the second negative electrode active material in the second negative electrode film layer, and the mass content of the negative electrode binder in the first negative electrode film layer is less than the mass content of the negative electrode binder in the second negative electrode film layer.

During the slurry drying process, the negative electrode binder will float up, causing the negative electrode binder content on the outer surface of the negative electrode film layer to increase, which is not conducive to the liquid phase conduction of ions inside the porous electrode of the negative electrode and the charge exchange of ions on the surface of the negative electrode active material.

By partitioning the negative electrode film layer and making the mass content w1 of the first negative electrode active material in the first negative electrode film layer greater than the mass content w2 of the second negative electrode active material in the second negative electrode film layer, and the mass content of the negative electrode binder in the first negative electrode film layer is less than the mass content of the negative electrode binder in the second negative electrode film layer, the problem of floating up of the negative electrode binder during the slurry drying process can be reduced, and the negative electrode binder content on the outer surface of the negative electrode film layer can be reduced, which is conductive to the liquid phase conduction of ions inside the negative porous electrode and the charge exchange of ions on the surface of the negative electrode active material, thereby further improving the kinetic performance of the battery.

Optionally, the mass content w1 of the first negative electrode active material in the first negative electrode film layer may be greater than or equal to 96.9%, optionally 96.9%-97.4%.

Optionally, the mass content w2 of the second negative electrode active material in the second negative electrode film layer may be less than 96.9%, optionally 96.4%-96.8%.

In some alternative embodiments, the second negative electrode active material may include graphite, the graphite has a secondary particle morphology, and the R value R50, which corresponds to a cumulative distribution of 50%, of the graphite is 0.06-0.14. The second negative electrode active material may be the inner core of the negative electrode active material provided in the above-mentioned embodiments of the present application, that is, graphite. The second negative electrode active material has no coating layer, thereby enabling the battery to have higher energy density.

Optionally, the mass content w1 of the first negative electrode active material in the first negative electrode film layer is greater than the mass content w2 of the second negative electrode active material in the second negative electrode film layer, and the mass content of the negative electrode binder in the first negative electrode film layer is less than the mass content of the negative electrode binder in the second negative electrode film layer.

By partitioning the negative electrode film layer and making the mass content w1 of the first negative electrode active material in the first negative electrode film layer greater than the mass content w2 of the second negative electrode active material in the second negative electrode film layer, and the mass content of the negative electrode binder in the first negative electrode film layer is less than the mass content of the negative electrode binder in the second negative electrode film layer, the problem of floating up of the negative electrode binder during the slurry drying process can be reduced, and the negative electrode binder content on the outer surface of the negative electrode film layer can be reduced, which is conductive to the liquid phase conduction of ions inside the negative porous electrode and the charge exchange of ions on the surface of the negative electrode active material, thereby further improving the kinetic performance of the battery.

Optionally, the mass content w1 of the second negative electrode active material in the first negative electrode film layer may be greater than or equal to 96.9%, optionally 96.9%-97.4%.

Optionally, the mass content w2 of the second negative electrode active material in the second negative electrode film layer may be less than 96.9%, optionally 96.4%-96.8%.

In some embodiments, the compacted density of the negative electrode film layer may be 1.60g/cm³-1.80g/cm³, optionally 1.65g/cm³-1.80g/cm³. The negative electrode active material provided in the embodiments of the present application or the negative electrode active material prepared by the preparation method provided in the embodiments of the present application can enable the negative electrode film layer to have high compacted density.

The compacted density of the negative electrode film layer refers to the ratio of the areal density of the negative electrode film layer to the thickness of the negative electrode film layer. The areal density of the negative electrode film layer refers to the ratio of the weight of the negative electrode film layer after coating, drying and rolling to the coating area.

The negative electrode film layer is usually formed by coating a negative electrode slurry on the negative electrode current collector, followed by drying and cold pressing. The negative electrode slurry is usually formed by dispersing the negative electrode active material, negative electrode conductive agent, negative electrode binder and other optional auxilliaries in a solvent and stirring them evenly. The solvent may be N-methyl pyrrolidone (NMP), but is not limited thereto.

The negative electrode plate does not exclude other additional functional layers other than the negative electrode film layer. For example, in some embodiments, the negative electrode plate may further comprise a conductive primer coating (e.g. composed of a conductive agent and a binder) sandwiched between the negative electrode current collector and the negative electrode film layer and arranged on the surface of the negative electrode current collector; in some embodiments, the negative electrode plate may further comprise a protective layer covering the surface of the negative electrode film layer.

### [Positive electrode plate]

The battery cell comprises a positive electrode plate.

The positive electrode plate comprises a positive electrode current collector and a positive electrode film layer provided on at least one surface of the positive electrode current collector. For example, the positive electrode current collector has two opposite surfaces in the direction of its own thickness, and the positive electrode film layer is provided on either or both of the two opposite surfaces of the positive electrode current collector.

The positive electrode film layer comprises a positive electrode active material. For example, the positive electrode active material may include but is not limited to one or more of lithium transition metal oxides, lithium-containing phosphates, and their respective modified compounds.

As an example, the lithium transition metal oxide may include but is not limited to one or more of lithium-cobalt oxide, lithium-nickel oxide, lithium-manganese oxide, lithium-nickel-cobalt oxide, lithium-manganese-cobalt oxide, lithium-nickel-manganese oxide, lithium-nickel-cobalt-manganese oxide, lithium-nickel-cobalt-aluminum oxide and their respective modified compounds. In some embodiments, the lithium transition metal oxide may include LiₐNi_{b}Co_{c}MₐOₑA_{f}, wherein 0 < a≤1.2; 0.8≤b < 1; 0 < c < 1; 0 < d < 1; 1≤e≤2; 0≤f≤1; M includes but is not limited to one or more of Mn, Al, Zr, Zn, Cu, Cr, Mg, Fe, V, Ti and B; A includes but is not limited to one or more of N, F, S and Cl. This can further increase the energy density of the battery cells. Optionally, the lithium transition metal oxide may include but is not limited to one or more of LiNi_{0.8}Co_{0.1}Mn_{0.1}O₂, LiNi_{0.80}Co_{0.15}Al_{0.05}O₂, LiNi_{0.9}Co_{0.06}Mn_{0.04}O₂, LiNi_{0.92}Co_{0.06}Mn_{0.02}O₂, and LiNi_{0.96}Co_{0.02}Mn_{0.02}O₂.

The charging and discharging process of battery cells is accompanied by the deintercalation and consumption of Li, and the molar content of Li in battery cells is different when they are discharged to different states. In the examples provided in the embodiments of the present application regarding the positive electrode active materials, the molar content of Li is the initial state of the material, that is, the state before feeding. When the positive electrode active materials are applied to battery cells and after charge and discharge cycles, the molar content of Li may change.

In the examples provided in the embodiments of the present application regarding the positive electrode active materials, the molar content of O is only a theoretical value. Oxygen release from the lattice will cause the molar content of O to change, and the actual molar content of O will fluctuate.

As an example, the lithium-containing phosphate may include but is not limited to one or more of lithium iron phosphate, composite materials of lithium iron phosphate and carbon, lithium manganese phosphate, composite materials of lithium manganese phosphate and carbon, lithium manganese iron phosphate, composite materials of lithium manganese iron phosphate and carbon, and their respective modified compounds.

The above-mentioned modified compounds of the positive electrode active materials may be obtained by modifying the positive electrode active material by doping and/or surface coating.

In some embodiments, the positive electrode film layer further optionally comprises a positive electrode conductive agent. As an example, the positive electrode conductive agent can include but is not limited to one or more of superconducting carbon, conductive graphite, acetylene black, carbon black, Ketjen black, carbon dots, carbon nanotubes, graphene and carbon nanofibers.

In some embodiments, the positive electrode film layer further optionally comprises a positive electrode binder. As an example, the positive electrode binder may include but is not limited to one or more of polyvinylidene fluoride (PVDF), polytetrafluoroethylene (PTFE), vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer, fluorine-containing acrylate resin, styrene butadiene rubber (SBR), water-soluble unsaturated resin SR-1B, water-based acrylic resin (such as polyacrylic acid (PAA), polymethacrylic acid (PMAA), and sodium polyacrylate (PAAS)), polyacrylamide (PAM), polyvinyl alcohol (PVA), sodium alginate (SA) and carboxymethyl chitosan (CMCS).

In some embodiments, the positive electrode current collector may be a metal foil or composite current collector. As an example of a metal foil, an aluminum foil can be used. The composite current collector may include a high molecular material substrate layer and a metal material layer formed on at least one surface of the high molecular material substrate layer. As an example, the metal material may include but is not limited to one or more of aluminum, aluminum alloy, nickel, nickel alloy, titanium, titanium alloy, silver and silver alloy. As an example, the high molecular material substrate layer may include but is not limited to one or more of polypropylene (PP), polyethylene terephthalate (PET), polybutylene terephthalate (PBT), polystyrene (PS), polyethylene (PE).

The positive electrode film layer is usually formed by coating a positive electrode slurry on the positive electrode current collector, followed by drying and cold pressing. The positive electrode slurry is generally formed by dispersing the positive electrode active material, the positive electrode conductive agent, the positive electrode binder and any other components in a solvent and sufficiently stirring the mixture. The solvent may be N-methyl pyrrolidone (NMP), but is not limited thereto.

### [Electrolyte]

The battery cell comprises an electrolyte. The type of the electrolyte is not specifically limited in the present application, and can be selected according to requirements. For example, the electrolyte may include one or more of solid electrolyte and liquid electrolyte (i.e. electrolyte solution).

In some embodiments, the electrolyte solution is employed as the electrolyte, and the electrolyte solution comprises an electrolyte salt and a solvent.

In some embodiments, as an example, the electrolyte salt may include but is not limited to one or more of lithium hexafluorophosphate (LiPF₆), lithium tetrafluoroborate (LiBF₄), lithium perchlorate (LiClO₄), lithium hexafluoroarsenate (LiAsF₆), lithium bis(fluorosulfonyl)imide (LiFSI), lithium bis(trifluoromethanesulfonyl)imide (LiTFSI), lithium trifluoromethanesulfonate (LiTFS), lithium difluoro(oxalato)borate (LiDFOB), lithium bis(oxalato)borate (LiBOB), lithium difluorophosphate (LiPO₂F₂), lithium difluoro bis(oxalato)phosphate (LiDFOP), and lithium tetrafluoro(oxalato)phosphate (LiTFOP).

In some embodiments, the solvent may include but is not limited to one or more of an ester solvent, a sulfone solvent, and an ether solvent. As an example, the solvent may include but is not limited to one or more of ethylene carbonate (EC), propylene carbonate (PC), ethyl methyl carbonate (EMC), diethyl carbonate (DEC), dimethyl carbonate (DMC), dipropyl carbonate (DPC), methyl propyl carbonate (MPC), ethyl propyl carbonate (EPC), butylene carbonate (BC), methyl formate (MF), methyl acetate (MA), ethyl acetate (EA), propyl acetate (PA), methyl propionate (MP), ethyl propionate (EP), propyl propionate (PP), methyl butyrate (MB), ethyl butyrate (EB), 1,4-butyrolactone (GBL), sulfolane (SF), methylsulfonylmethane (MSM), ethyl methyl sulfone (EMS) and ethyl sulfonyl ethane (ESE).

In some embodiments, the electrolyte solution further optionally comprises additives. For example, the additive may include a negative electrode film-forming additive, or may include a positive electrode film-forming additive, and may further include an additive capable of improving certain performance of the battery, such as an additive for improving the overcharging performance of the battery, an additive for improving the high temperature performance of the battery, an additive for improving the low temperature power performance of the battery, etc.

### [Separator]

The battery cells using an electrolyte solution and some battery cells using a solid electrolyte further comprise a separator. The separator is provided between the positive electrode plate and the negative electrode plate, mainly to prevent internal short circuit.

The type of the separator is not particularly limited in the present application, and any well-known separator having good chemical stability, mechanical stability, and a porous structure may be selected.

In some embodiments, the material of the separator may include but is not limited to one or more of glass fiber, non-woven fabric, polyethylene (PE), polypropylene (PP), and polyvinylidene fluoride. The separator may be a single-layer film or a multi-layer composite film. When the separator is a multi-layer composite film, the materials of the layers are the same or different.

Methods for preparing battery cells are well known. **In** some embodiments, the positive electrode plate, the separator, the negative electrode plate and the electrolyte solution can be assembled into a battery cell. As an example, the positive electrode plate, the separator and the negative electrode plate can be made into an electrode assembly by a winding process and/or stacking process, the electrode assembly is placed into an outer package, oven dried, injected with the above-mentioned electrolyte solution, and subjected to vacuum packaging, standing, formation and other processes to obtain a battery cell. A plurality of battery cells may be further connected in series, in parallel or in series and parallel to form a battery module. A plurality of battery modules may be further connected in series, in parallel or in series and parallel to form a battery pack. In some embodiments, a plurality of battery cells can also directly form a battery pack.

### Electrical apparatus

An embodiment of the present application further provides an electrical apparatus comprising the battery provided in the embodiments of the present application, the battery being used for providing electric energy. The battery may be used as a power source of the electrical apparatus, or may be used as an energy storage unit of the electrical apparatus. The electrical apparatus may be but is not limited to a mobile device (e.g. a mobile phone, a tablet computer, and a laptop), an electric vehicle (e.g. an all-electric vehicle, a hybrid electric vehicle, a plug-in hybrid electric vehicle, an electric bicycle, an electric scooter, an electric golf cart, and an electric truck), an electric train, a ship and a satellite, an energy storage system, and the like.

For the electrical apparatus, the specific type of battery, such as battery cell, battery module, or battery pack, can be selected according to its use requirements.

Fig. 6 is a schematic diagram of an electrical apparatus as an example. The electrical apparatus is an all-electric vehicle, a hybrid electric vehicle, a plug-in hybrid electric vehicle, or the like. In order to meet the requirements of the electrical apparatus for high power and high energy density, a battery pack or a battery module may be used.

As another example, the electrical apparatus may be a mobile phone, a tablet, a laptop, etc. The electrical apparatus is generally required to be thin and light, and may use a battery cell as a power source.

### Examples

The following examples more specifically describe the contents disclosed in the present application. These examples are intended for illustrative purposes only, since various modifications and changes within the scope of the contents disclosed in the present application will be apparent to those skilled in the art. Unless otherwise stated, all parts, percentages and ratios reported in the following examples are based on mass, all reagents used in the examples are either commercially available or synthesized according to conventional methods, and can be directly used without further processing, and all the instruments used in the examples are commercially available.

### Example 1

### (1) Preparation of negative electrode active material

Petroleum needle coke was crushed, shaped and graded to obtain an aggregate; the resulting aggregate was mixed with binder asphalt in a mass ratio of 100:8 and placed in a horizontal reactor for heating and granulation. A stepwise heating and holding process was adopted during heating. The programmed heating platforms were set as follows: 200°C, 300°C, and 600°C, respectively, 200°C for 1h, 300°C for 2h, 600°C for 2h, and cooling for 3h prior to discharge of the material. The granulated material was placed in an Acheson graphitization furnace for graphitization at 2900°C to obtain graphite.

Graphite and a liquid-phase hard carbon coating agent in a mass ratio of 100:5 were subjected to solid-liquid fusion in a fusion machine. The liquid-phase hard carbon coating agent was a commercially available liquid phenolic resin with a weight average molecular weight of 600, a viscosity of 680mPa·s at 25°C, a solid content of 73%-74%, a free phenol mass content of 6.5%, and a free aldehyde content of 0. The product obtained after solid-liquid fusion was placed in a track kiln, heated to 1150°C at 2.18°C/min under a nitrogen atmosphere for carbonization, held for 370min, and after the carbonization, cooled to 50°C at 2.04°C/min and then taken out of the kiln. Then, it was subjected to depolymerization, screening and demagnetization to obtain a negative electrode active material.

### (2) Preparation of negative electrode plate

The above-mentioned negative electrode active material, thickener sodium carboxymethyl cellulose, negative electrode binder styrene butadiene rubber emulsion (SBR) and negative electrode conductive agent Super P were mixed in a mass ratio of 97.3:1.1:0.8:0.8, solvent deionized water was added, and the mixture was uniformly stirred under the action of a vacuum stirrer to obtain a first negative electrode slurry.

The above-mentioned negative electrode active material, thickener sodium carboxymethyl cellulose, negative electrode binder styrene butadiene rubber emulsion (SBR) and negative electrode conductive agent Super P were mixed in a mass ratio of 96.5:1.1:2.0:0.4, solvent deionized water was added, and the mixture was uniformly stirred under the action of a vacuum stirrer to obtain a second negative electrode slurry.

The second negative electrode slurry was evenly applied on the two surfaces of the negative electrode collector copper foil, the first negative electrode slurry was applied on the second negative electrode slurry, the negative electrode collector coated with the slurry was dried in the air at room temperature and then transferred to an oven for drying, and then cold pressed and slit to obtain a negative electrode plate. The thickness of the negative electrode film layer on one side of the negative electrode current collector is 58µm. The ratio of the coating thickness of the first negative electrode slurry to the coating thickness of the second negative electrode slurry is 4:6.

### (3) Preparation of positive electrode plate

Positive electrode active material LiNi_{0.8}Co_{0.1}Mn_{0.1}O₂, positive electrode conductive agent Super P and positive electrode binder polyvinylidene fluoride (PVDF) were mixed in a mass ratio of 96:2:2, solvent N-methyl pyrrolidone (NMP) was added, and the system was stirred under the action of a vacuum stirrer until the system was uniform and transparent to obtain a positive electrode slurry; the positive electrode slurry was evenly applied onto the two surface of positive electrode current collector aluminum foil; and the positive electrode current collector coated with the slurry was dried in the air at room temperature, then transferred into an oven for drying, and then subjected to cold pressing and slitting to obtain a positive electrode plate.

### (4) Preparation of electrolyte solution

Ethylene carbonate (EC), ethyl methyl carbonate (EMC), and diethyl carbonate (DEC) were mixed in a volume ratio of 1:1:1, and then fully dried lithium salt LiPF₆ was dissolved in the mixed solvent in a ratio of 1 mol/L to prepare an electrolyte solution.

### (5) Preparation of separator

A 12-micron polyethylene film was used.

### (6) Preparation of battery (full battery)

The above-mentioned positive electrode plate, separator and negative electrode plate were stacked in sequence, so that the separator was positioned between the positive electrode plate and the negative electrode plate for separation, and then they were wound to obtain an electrode assembly; the electrode assembly was placed in an outer package, the electrolyte solution prepared above was injected into the dried electrode assembly, and the system was subjected to vacuum packaging, standing, formation, shaping and other processes to obtain a battery.

### Comparative Example 1

The preparation process of the battery is the same as that of Example 1 except that the preparation process of the negative electrode active material is different.

### (1) Preparation of negative electrode active material

Petroleum needle coke was crushed, shaped and graded to obtain an aggregate; the resulting aggregate was mixed with binder asphalt in a mass ratio of 100:8 and placed in a horizontal reactor for heating and granulation. A stepwise heating and holding process was adopted during heating. The programmed heating platforms were set as follows: 200°C, 300°C, and 600°C, respectively, 200°C for 1h, 300°C for 2h, 600°C for 2h, and cooling for 3h prior to discharge of the material. The granulated material was placed in an Acheson graphitization furnace for graphitization at 2900°C, and then screened and demagnetized to obtain graphite as the negative electrode active material.

### Comparative Example 2

The preparation process of the battery is the same as that of Example 1 except that the preparation process of the negative electrode active material is different.

### (1) Preparation of negative electrode active material

Petroleum needle coke was crushed, shaped and graded to obtain an aggregate; the resulting aggregate was mixed with binder asphalt in a mass ratio of 100:8 and placed in a horizontal reactor for heating and granulation. A stepwise heating and holding process was adopted during heating. The programmed heating platforms were set as follows: 200°C, 300°C, and 600°C, respectively, 200°C for 1h, 300°C for 2h, 600°C for 2h, and cooling for 3h prior to discharge of the material. The granulated material was placed in an Acheson graphitization furnace for graphitization at 2900°C to obtain graphite.

Graphite and a solid phase coating agent in a mass ratio of 100:4.5 were subjected to solid-solid stirring in a fusion machine. The solid phase coating agent was asphalt with a softening point between 200°C and 300°C. The product obtained after solid-solid fusion was placed in a track kiln, heated to 1150°C at 2.85°C/min under a nitrogen atmosphere for carbonization, held for 370min, and after the carbonization, cooled to 50°C at 2.04°C/min and then taken out of the kiln. Then, it was subjected to depolymerization, screening and demagnetization to obtain a negative electrode active material.

### Comparative Example 3

The preparation process of the battery is the same as that of Example 1 except that the preparation process of the negative electrode active material is different.

### (1) Preparation of negative electrode active material

Petroleum needle coke was crushed, shaped and graded to obtain an aggregate; the resulting aggregate was mixed with binder asphalt in a mass ratio of 100:8 and placed in a horizontal reactor for heating and granulation. A stepwise heating and holding process was adopted during heating. The programmed heating platforms were set as follows: 200°C, 300°C, and 600°C, respectively, 200°C for 1h, 300°C for 2h, 600°C for 2h, and cooling for 3h prior to discharge of the material. The granulated material was placed in an Acheson graphitization furnace for graphitization at 2900°C to obtain graphite.

Graphite and a liquid-phase hard carbon coating agent in a mass ratio of 100:5 were subjected to solid-liquid fusion in a fusion machine. The liquid-phase hard carbon coating agent was a commercially available liquid phenolic resin with a weight average molecular weight of 950, a viscosity of 3050mPa·s at 25°C, a solid content of 73%-74%, a free phenol mass content of 6.5%, and a free aldehyde content of 0. The product obtained after solid-liquid fusion was placed in a track kiln, heated to 1150°C at 3.2°C/min under a nitrogen atmosphere for carbonization, held for 370min, and after the carbonization, cooled to 50°C at 2.04°C/min and then taken out of the kiln. Then, it was subjected to depolymerization, screening and demagnetization to obtain a negative electrode active material.

### Performance test of liquid-phase hard carbon coating agent

The viscosity of the liquid-phase hard carbon coating agent was tested with reference to GB/T 14074-2017. The test temperature was 25°C and the test device was a NDJ-1 type rotational viscometer.

The solid content of the liquid-phase hard carbon coating agent was tested by the oven drying method with reference to GB/T 14074-2017. The oven temperature was set to be 150°C for baking to constant weight.

The weight average molecular weight of liquid phenolic resin was tested by gel permeation chromatography. The test instrument was an Agilent 1290 Infinity II GPC system. The eluent was tetrahydrofuran, and polystyrene standards were used for calibration.

The content of free phenol in liquid phenolic resin was tested with reference to GB/T 30773-2014.

The free aldehyde content in liquid phenolic resin was tested by potentiometric titration with reference to GB/T 32684-2016.

### Performance test of negative electrode active material and battery

### (1) Raman spectroscopy for negative electrode active material

The testing instrument was a high-precision Renishaw laser microscopic confocal Raman spectrometer. The laser wavelength was 532nm.

During the test, a suitable amount of sample was taken to perform an all-round scan on its surface. The scanning area was 100µm × 100µm, the step length was 2µm, and the total number of scanning points was 2500 points, thereby obtaining the R values at different positions and the R value cumulative distribution curve. The R value refers to the ratio of peak height of the D peak to the G peak of the Raman spectrum. The wavelength of the D peak is 1350±50cm⁻¹, and the wavelength of the G peak is 1585±50cm⁻¹. R90 is the R value with cumulative distribution of 90% from the lower limit, R10 is the R value with cumulative distribution of 10% from the lower limit, and R50 is the R value with cumulative distribution of 50% from the lower limit. The centralization of R values is expressed by (R90-R10)/R50.

The Raman spectroscopy for graphite and coating layer materials was performed using a similar method as described above.

The coating layer material sample can be obtained as follows: take an appropriate amount of liquid-phase hard carbon coating agent or solid coating agent, and perform carbonization under the same carbonization conditions as the Examples and Comparative Examples, and then grind and sieve the obtained material to obtain the coating layer material sample.

### (2) Gram capacity test of negative electrode active material

The negative electrode active material sample was mixed with conductive agent Super P, binder polyvinylidene fluoride (PVDF) in a mass ratio of 91.6:1.8:6.6 in solvent N-methyl pyrrolidone (NMP) to prepare a slurry; the prepared slurry was applied on a copper foil current collector, and then dried in an oven and cold pressed for later use, with the compacted density being controlled to be 1.4g/cm³-1.6g/cm³; then, a metal lithium sheet was used as the counter electrode, a polyethylene film was used as the separator, an electrolyte solution was injected, to assemble a CR2430 button battery in an argon-protected glove box. The electrolyte formula used was as follows: ethylene carbonate (EC), ethyl methyl carbonate (EMC), and diethyl carbonate (DEC) were mixed in a volume ratio of 1:1:1, and then fully dried lithium salt LiPF₆ was dissolved in the mixed solvent in a ratio of 1 mol/L to prepare an electrolyte solution. At 25°C, the obtained button battery was left to stand for 12 h, then discharged at a constant current of 0.05C to 0.005V, left to stand for 10 min, and then discharged at a constant current of 50µA to 0.005V, left to stand for 10 min, and then discharged at a constant current of 10µA to 0.005V, and the sum of the three discharge capacities was taken as the first-cycle discharge capacity of the button battery; then the button battery was charged at a constant current of 0.1C to 2.0V, and the first-cycle charging capacity of the button battery was recorded. The ratio of the first cycle charging capacity of the button battery to the mass of the negative electrode active material sample is the gram capacity of the negative electrode active material.

### (3) Powder compacted density test of negative electrode active materials

A proper amount of negative electrode active material powder was placed in a special mold for compaction, the mold was placed on a compacted density instrument, different pressures were set, the thickness of the powder under different pressures was read on the device (here is the thickness after pressure relief), and the powder compacted density ρ of the negative electrode active material under the corresponding pressure was calculated through ρ=m/(s*h). During the test, the pressure was set to be 20000N. m represents the mass of the negative electrode active material powder sample, in g. s is the bottom area of the special mold for compaction, which is 1.327cm² here. h is the compacted thickness of the negative electrode active material powder sample, in cm.

### (4) Battery's mass energy density test

At 25°C, the batteries prepared in the Examples and Comparative Examples were fully charged at a rate of 0.33C, fully discharged at a rate of 0.33C, and the actual discharge energy D0 after charging and discharging for three times was recorded. The battery charge and discharge voltage range was 2.5V to 4.25V. The battery was weighed at 25°C using an electronic balance. The ratio of the actual discharge energy D0 of the battery to the battery mass represents the volumetric energy density of the battery.

### (5) Battery critical charging rate test

At 25°C, the batteries prepared in the Examples and Comparative Examples were charged and discharged at an equivalent charging rate of xC for full charging and 1C for full discharging. After 10 cycles, the batteries were fully charged at an equivalent charging rate of xC, the negative electrode plates were disassembled and observed for lithium plating on the surface. The battery charge and discharge voltage range was 2.5V to 4.25V. If no lithium was plated on the surface of the negative electrode, the above test was performed with the equivalent charging rate xC increased with a gradient of 0.1C until lithium was plated on the surface of the negative electrode. The test was stopped and the charging rate xC at this time was recorded. (x-0.1)C was recorded as the critical charging rate of the battery.

### (6) Battery cycling performance test

At 35°C, the batteries prepared in the Examples and Comparative Examples were fully charged at a rate of 1C and fully discharged at a rate of 0.5C, and the charge-discharge cycle was repeated. The charge and discharge voltage range of the batteries was 2.5V to 4.25V. The capacity retention rate of the battery after 2000 cycles is used to characterize the cycling performance of the battery. The higher the value, the better the cycling performance of the battery. Capacity retention rate of battery after 2000 cycles = discharge capacity after 2000 cycles/discharge capacity after the first cycle.

**Table 1**

| Serial number | Test results of negative electrode active material | | | Battery test results | |
|---|---|---|---|---|---|
| | (R90-R10)/R50 | Gram capacity (mAh/g) | Powder compacted density (g/cm³) | Mass energy density (Wh/kg) | Critical charging rate |
| Example 1 | 1.40 | 357.0 | 1.75 | 240.0 | 4.0C |
| Comparative Example 1 | Not tested | 359.5 | 1.78 | 241.5 | 3.0C |
| Comparative Example 2 | 2.50 | 355.0 | 1.71 | 238.5 | 3.2C |
| Comparative Example 3 | 2.50 | 356.0 | 1.74 | 239.3 | 3.1C |

In Comparative Example 1, no coating layer is provided on the graphite surface, and the battery can have a high energy density, but the fast charging performance of the battery is very poor.

Comparative Examples 2 and 3 arrange a coating layer on the graphite surface, but the centralization of R values of the prepared negative electrode active material is greater than 2.0, the coating uniformity of the coating layer on the graphite surface is poor, and the effect of improving the fast charging performance of the battery is not obvious. At the same time, the energy density of the battery is still lower than that of Comparative Example 1.

The negative electrode active material prepared in Example 1 can improve the fast charging performance of the battery without significantly reducing the battery energy density. Therefore, the negative electrode active material prepared in the examples of the present application can enable the battery to have both high energy density and good kinetic performance.

### Example 2

The preparation process of the battery is the same as that of Example 1 except that the preparation process of the negative electrode active material is different.

### (1) Preparation of negative electrode active material

Petroleum needle coke was crushed, shaped and graded to obtain an aggregate; the resulting aggregate was mixed with binder asphalt in a mass ratio of 100:8 and placed in a horizontal reactor for heating and granulation. A stepwise heating and holding process was adopted during heating. The programmed heating platforms were set as follows: 200°C, 300°C, and 600°C, respectively, 200°C for 1h, 300°C for 2h, 600°C for 2h, and cooling for 3h prior to discharge of the material. The granulated material was placed in an Acheson graphitization furnace for graphitization at 2900°C to obtain graphite.

Graphite and a liquid-phase hard carbon coating agent in a mass ratio of 100:5 were subjected to solid-liquid fusion in a fusion machine. The liquid-phase hard carbon coating agent was a commercially available liquid phenolic resin with a weight average molecular weight of 680, a viscosity of 930mPa·s at 25°C, a solid content of 73%-74%, a free phenol mass content of 6.5%, and a free aldehyde content of 0. The product obtained after solid-liquid fusion was placed in a track kiln, heated to 1150°C at 2.18°C/min under a nitrogen atmosphere for carbonization, held for 370min, and after the carbonization, cooled to 50°C at 2.04°C/min and then taken out of the kiln. Then, it was subjected to depolymerization, screening and demagnetization to obtain a negative electrode active material.

### Example 3

The preparation process of the battery is the same as that of Example 1 except that the preparation process of the negative electrode active material is different.

### (1) Preparation of negative electrode active material

Petroleum needle coke was crushed, shaped and graded to obtain an aggregate; the resulting aggregate was mixed with binder asphalt in a mass ratio of 100:8 and placed in a horizontal reactor for heating and granulation. A stepwise heating and holding process was adopted during heating. The programmed heating platforms were set as follows: 200°C, 300°C, and 600°C, respectively, 200°C for 1h, 300°C for 2h, 600°C for 2h, and cooling for 3h prior to discharge of the material. The granulated material was placed in an Acheson graphitization furnace for graphitization at 2900°C to obtain graphite.

Graphite and a liquid-phase hard carbon coating agent in a mass ratio of 100:5 were subjected to solid-liquid fusion in a fusion machine. The liquid-phase hard carbon coating agent was a commercially available liquid phenolic resin with a weight average molecular weight of 550, a viscosity of 330mPa·s at 25°C, a solid content of 73%-74%, a free phenol mass content of 6.5%, and a free aldehyde content of 0. The product obtained after solid-liquid fusion was placed in a track kiln, heated to 1150°C at 2.18°C/min under a nitrogen atmosphere for carbonization, held for 370min, and after the carbonization, cooled to 50°C at 2.04°C/min and then taken out of the kiln. Then, it was subjected to depolymerization, screening and demagnetization to obtain a negative electrode active material.

### Example 4

The preparation process of the battery is the same as that of Example 1 except that the preparation process of the negative electrode active material is different.

### (1) Preparation of negative electrode active material

Petroleum needle coke was crushed, shaped and graded to obtain an aggregate; the resulting aggregate was mixed with binder asphalt in a mass ratio of 100:8 and placed in a horizontal reactor for heating and granulation. A stepwise heating and holding process was adopted during heating. The programmed heating platforms were set as follows: 200°C, 300°C, and 600°C, respectively, 200°C for 1h, 300°C for 2h, 600°C for 2h, and cooling for 3h prior to discharge of the material. The granulated material was placed in an Acheson graphitization furnace for graphitization at 2900°C to obtain graphite.

Graphite and a liquid-phase hard carbon coating agent in a mass ratio of 100:5 were subjected to solid-liquid fusion in a fusion machine. The liquid-phase hard carbon coating agent was a commercially available liquid phenolic resin with a weight average molecular weight of 880, a viscosity of 2450mPa·s at 25°C, a solid content of 73%-74%, a free phenol mass content of 6.5%, and a free aldehyde content of 0. The product obtained after solid-liquid fusion was placed in a track kiln, heated to 1150°C at 2.18°C/min under a nitrogen atmosphere for carbonization, held for 370min, and after the carbonization, cooled to 50°C at 2.04°C/min and then taken out of the kiln. Then, it was subjected to depolymerization, screening and demagnetization to obtain a negative electrode active material.

### Example 5

The preparation process of the battery is the same as that of Example 1 except that the preparation process of the negative electrode active material is different.

### (1) Preparation of negative electrode active material

Petroleum needle coke was crushed, shaped and graded to obtain an aggregate; the resulting aggregate was mixed with binder asphalt in a mass ratio of 100:8 and placed in a horizontal reactor for heating and granulation. A stepwise heating and holding process was adopted during heating. The programmed heating platforms were set as follows: 200°C, 300°C, and 600°C, respectively, 200°C for 1h, 300°C for 2h, 600°C for 2h, and cooling for 3h prior to discharge of the material. The granulated material was placed in an Acheson graphitization furnace for graphitization at 2900°C to obtain graphite.

Graphite and a liquid-phase hard carbon coating agent in a mass ratio of 100:5 were subjected to solid-liquid fusion in a fusion machine. The liquid-phase hard carbon coating agent was a commercially available liquid phenolic resin with a weight average molecular weight of 410, a viscosity of 155mPa·s at 25°C, a solid content of 73%-74%, a free phenol mass content of 6.5%, and a free aldehyde content of 0. The product obtained after solid-liquid fusion was placed in a track kiln, heated to 1150°C at 2.18°C/min under a nitrogen atmosphere for carbonization, held for 370min, and after the carbonization, cooled to 50°C at 2.04°C/min and then taken out of the kiln. Then, it was subjected to depolymerization, screening and demagnetization to obtain a negative electrode active material.

**Table 2**

| Serial number | Liquid phenolic resin parameters | | Raman spectroscopy results of coating layer | | Test results of negative electrode active material | | | | Battery test results | |
|---|---|---|---|---|---|---|---|---|---|---|
| | Weight average molecular weight | Viscosity (mPa·s) | R5 0 | (R90- R10)/ R50 | R50 | (R90- R10)/ R50 | Gram capacity (mAh/g) | Powder compacted density (g/cm³) | Mass energy density (Wh/kg) | Critical charging rate |
| Example 1 | 600 | 680 | 1. 11 | 0.13 | 0.25 | 1.40 | 357.0 | 1.75 | 240.0 | 4.0C |
| Example 2 | 680 | 930 | 1. 17 | 0.18 | 0.28 | 1.60 | 357.0 | 1.75 | 239.9 | 3.8C |
| Example 3 | 550 | 330 | 1. 18 | 0.17 | 0.26 | 1.70 | 357.5 | 1.76 | 240.3 | 3.8C |
| Example 4 | 880 | 2450 | 1. 18 | 0.33 | 0.28 | 1.90 | 356.5 | 1.74 | 239.6 | 3.4C |
| Example 5 | 410 | 155 | 1. 18 | 0.25 | 0.30 | 1.90 | 358.5 | 1.77 | 241.0 | 3.4C |

It can be seen from the test results of Examples 1 to 5 that as the (R90-R10)/R50 of the negative electrode active material decreases, the rapid charging performance of the battery is improved. It can be seen from the test results of Examples 1 to 5 that by adjusting the weight average molecular weight and/or viscosity of the liquid phenolic resin, the (R90-R10)/R50 of the negative electrode active material can be adjusted.

### Example 6

The preparation process of the battery is the same as that of Example 1 except that the preparation process of the negative electrode active material is different.

### (1) Preparation of negative electrode active material

Petroleum needle coke was crushed, shaped and graded to obtain an aggregate; the resulting aggregate was mixed with binder asphalt in a mass ratio of 100:8 and placed in a horizontal reactor for heating and granulation. A stepwise heating and holding process was adopted during heating. The programmed heating platforms were set as follows: 200°C, 300°C, and 600°C, respectively, 200°C for 1h, 300°C for 2h, 600°C for 2h, and cooling for 3h prior to discharge of the material. The granulated material was placed in an Acheson graphitization furnace for graphitization at 2900°C to obtain graphite.

Graphite and a liquid-phase hard carbon coating agent in a mass ratio of 100:5 were subjected to solid-liquid fusion in a fusion machine. The liquid-phase hard carbon coating agent was a commercially available liquid phenolic resin with a weight average molecular weight of 300, a viscosity of 680mPa·s at 25°C, a solid content of 73%-74%, a free phenol mass content of 6.5%, and a free aldehyde content of 0. The product obtained after solid-liquid fusion was placed in a track kiln, heated to 1150°C at 2.18°C/min under a nitrogen atmosphere for carbonization, held for 370min, and after the carbonization, cooled to 50°C at 2.04°C/min and then taken out of the kiln. Then, it was subjected to depolymerization, screening and demagnetization to obtain a negative electrode active material.

**Table 3**

| Serial number | Raman spectroscopy results of coating layer | | Raman spectroscopy results of negative electrode active material | | Battery test results | |
|---|---|---|---|---|---|---|
| | R50 | (R90-R10)/R50 | R50 | (R90-R10)/R50 | Critical charging rate | Capacity retention rate after 2000 cycles |
| Example 1 | 1.11 | 0.13 | 0.25 | 1.40 | 4.0C | 80.4% |
| Example 6 | 1.35 | 0.18 | 0.30 | 1.80 | 3.6C | 78% |

It can be seen from the test results in Table 3 that further adjusting the (R90-R10)/R50 of the negative electrode active material can also allow the battery to have good cycling performance.

### Example 7

The preparation process of the battery is the same as that of Example 2 except that the preparation process of the negative electrode active material is different.

### (1) Preparation of negative electrode active material

Petroleum needle coke was crushed, shaped and graded to obtain an aggregate; the resulting aggregate was mixed with binder asphalt in a mass ratio of 100:8 and placed in a horizontal reactor for heating and granulation. A stepwise heating and holding process was adopted during heating. The programmed heating platforms were set as follows: 200°C, 300°C, and 600°C, respectively, 200°C for 1h, 300°C for 2h, 600°C for 2h, and cooling for 3h prior to discharge of the material. The granulated material was placed in an Acheson graphitization furnace for graphitization at 2900°C to obtain graphite.

Graphite and a liquid-phase hard carbon coating agent in a mass ratio of 100:5 were subjected to solid-liquid fusion in a fusion machine. The liquid-phase hard carbon coating agent was a commercially available liquid phenolic resin with a weight average molecular weight of 680, a viscosity of 930mPa·s at 25°C, a solid content of 73%-74%, a free phenol mass content of 7.5%, and a free aldehyde content of 0. The product obtained after solid-liquid fusion was placed in a track kiln, heated to 1150°C at 2.85°C/min under a nitrogen atmosphere for carbonization, held for 370min, and after the carbonization, cooled to 50°C at 2.04°C/min and then taken out of the kiln. Then, it was subjected to depolymerization, screening and demagnetization to obtain a negative electrode active material.

**Table 4**

| Serial number | Raman spectroscopy results of coating layer | | Test results of negative electrode active material | | | | Battery test results | |
|---|---|---|---|---|---|---|---|---|
| | R50 | (R90-R10)/R50 | R50 | (R90-R10)/R50 | Gram capacity (mAh/g) | Powder compacted density (g/cm³) | Mass energy density (Wh/kg) | Critical charging rate |
| Example 2 | 1.22 | 0.18 | 0.28 | 1.60 | 357.0 | 1.75 | 240.0 | 3.8C |
| Example 7 | 1.18 | 0.22 | 0.26 | 2.00 | 356.0 | 1.75 | 239.3 | 3.4C |

It can be seen from the test results in Table 4 that by adjusting the free phenol content of the liquid phenolic resin and/or the heating rate of the carbonization heating stage, the (R90-R10)/R50 of the negative electrode active material can be adjusted, and the fast charging performance of the battery can also be improved.

### Example 8

The preparation process of the battery is the same as that of Example 1 except that the preparation process of the negative electrode active material is different.

### (1) Preparation of negative electrode active material

Petroleum needle coke was crushed, shaped and graded to obtain an aggregate; the resulting aggregate was mixed with binder asphalt in a mass ratio of 100:8 and placed in a horizontal reactor for heating and granulation. A stepwise heating and holding process was adopted during heating. The programmed heating platforms were set as follows: 200°C, 300°C, and 600°C, respectively, 200°C for 1h, 300°C for 2h, 600°C for 2h, and cooling for 3h prior to discharge of the material. The granulated material was placed in an Acheson graphitization furnace for graphitization at 3200°C to obtain graphite.

Graphite and a liquid-phase hard carbon coating agent in a mass ratio of 100:5 were subjected to solid-liquid fusion in a fusion machine. The liquid-phase hard carbon coating agent was a commercially available liquid phenolic resin with a weight average molecular weight of 600, a viscosity of 680mPa·s at 25°C, a solid content of 73%-74%, a free phenol mass content of 6.5%, and a free aldehyde content of 0. The product obtained after solid-liquid fusion was placed in a track kiln, heated to 1150°C at 2.18°C/min under a nitrogen atmosphere for carbonization, held for 370min, and after the carbonization, cooled to 50°C at 2.04°C/min and then taken out of the kiln. Then, it was subjected to depolymerization, screening and demagnetization to obtain a negative electrode active material.

**Table 5**

| Serial number | Graphit ization tempera ture (°C) | R50 of graphite | Test results of negative electrode active material | | Battery test results | | |
|---|---|---|---|---|---|---|---|
| | | | R50 | (R90-R10)/R50 | Mass energy density (Wh/kg) | Critical charging rate | Capacity retention rate after 2000 cycles |
| Example 1 | 2900 | 0.09 | 0.25 | 1.40 | 240.0 | 4.0C | 80.4% |
| Example 8 | 3200 | 0.06 | 0.23 | 1.38 | 241.3 | 3.5C | 78% |

It can be seen from the test results in Table 5 that, when other conditions are the same, the R value R50, which corresponds to a cumulative distribution of 50%, of graphite increases, and the fast charging performance of the battery is improved.

### Example 9

The preparation process of the battery is the same as that of Example 1 except that the preparation process of the negative electrode active material is different.

### (1) Preparation of negative electrode active material

Petroleum needle coke was crushed, shaped and graded to obtain an aggregate; the resulting aggregate was mixed with binder asphalt in a mass ratio of 100:8 and placed in a horizontal reactor for heating and granulation. A stepwise heating and holding process was adopted during heating. The programmed heating platforms were set as follows: 200°C, 300°C, and 600°C, respectively, 200°C for 1h, 300°C for 2h, 600°C for 2h, and cooling for 3h prior to discharge of the material. The granulated material was placed in an Acheson graphitization furnace for graphitization at 2900°C to obtain graphite.

Graphite and a liquid-phase hard carbon coating agent in a mass ratio of 100:1.1 were subjected to solid-liquid fusion in a fusion machine. The liquid-phase hard carbon coating agent was a commercially available liquid phenolic resin with a weight average molecular weight of 600, a viscosity of 680mPa·s at 25°C, a solid content of 73%-74%, a free phenol mass content of 6.5%, and a free aldehyde content of 0. The product obtained after solid-liquid fusion was placed in a track kiln, heated to 1150°C at 2.18°C/min under a nitrogen atmosphere for carbonization, held for 370min, and after the carbonization, cooled to 50°C at 2.04°C/min and then taken out of the kiln. Then, it was subjected to depolymerization, screening and demagnetization to obtain a negative electrode active material.

**Table 6**

| Serial number | Test results of negative electrode active material | | | Battery test results | | |
|---|---|---|---|---|---|---|
| | R50 | (R90-R10)/R50 | Coating layer mass : inner core mass | Mass energy density (Wh/kg) | Critical charging rate | Capacity retention rate after 2000 cycles |
| Example 1 | 0.25 | 1.40 | 2.1:100 | 240.0 | 4.0C | 80.4% |
| Example 9 | 0.20 | 1.85 | 0.5:100 | 240.6 | 3.4C | 82.5% |

It can be seen from the test results in Table 6 that by adjusting the ratio of the mass of the liquid-phase hard carbon coating agent to the mass of graphite, the (R90-R10)/R50 of the negative electrode active material can be adjusted.

### Example 10

The preparation process of the battery is the same as that of Example 1 except that the preparation process of the negative electrode plate is different.

### (2) Preparation of negative electrode plate

The above-mentioned negative electrode active material, thickener sodium carboxymethyl cellulose, negative electrode binder styrene butadiene rubber emulsion (SBR) and negative electrode conductive agent Super P were mixed in a mass ratio of 96.9:1.1:1.5:0.5, solvent deionized water was added, and the mixture was uniformly stirred under the action of a vacuum stirrer to obtain a negative electrode slurry.

The negative electrode slurry was evenly applied on the two surfaces of the negative electrode collector copper foil, the negative electrode collector coated with the slurry was dried in the air at room temperature and then transferred to an oven for drying, and then cold pressed and slit to obtain a negative electrode plate. The thickness of the negative electrode film layer on one side of the negative electrode current collector is 58µm.

**Table 7**

| Serial number | Critical charging rate |
|---|---|
| Example 1 | 4.0C |
| Example 10 | 3.6C |

It can be seen from the test results in Table 7 that by partitioning the negative electrode film layer and making the mass content of the first negative electrode active material in the first negative electrode film layer greater than the mass content of the second negative electrode active material in the second negative electrode film layer and the mass content of the negative electrode binder in the first negative electrode film layer less than the mass content of the negative electrode binder in the second negative electrode film layer, the battery can have a higher critical charging rate, thereby making the battery have better fast charging performance. This is attributable to the fact that the above arrangement can reduce the problem of floating up of the negative electrode binder during the slurry drying process and thus reduce the negative electrode binder content on the outer surface of the negative electrode film layer, which is conductive to the liquid phase conduction of ions inside the porous electrode of the negative electrode and the charge exchange of ions on the surface of the negative electrode active material, thereby making the battery have better fast charging performance.

It should be noted that the present application is not limited to the above-mentioned embodiments. The above-mentioned embodiments are examples only, and any embodiment that has substantially the same constitutions and has the same effects as the technical ideas within the scope of the technical solutions of the present application is encompassed within the technical scope of the present application. In addition, without departing from the scope of the subject matter of the present application, various modifications that can be conceived by those skilled in the art are applied to the embodiments, and other modes constructed by combining some of the constituent elements of the embodiments are also included in the scope of the present application.

## Claims

1. A lithium-ion battery, comprising one or more battery cells, the battery cell comprising a negative electrode plate, wherein
the negative electrode plate comprises a negative electrode current collector and a negative electrode film layer located on at least one surface of the negative electrode current collector, the negative electrode film layer comprises a negative electrode active material, the negative electrode active material comprises a inner core and a coating layer located on at least a part of the surface of the inner core, the inner core comprises graphite, and the coating layer comprises amorphous carbon;
in a cumulative distribution curve of R values of the negative electrode active material obtained under a surface scanning mode of a laser microscopic confocal Raman spectrometer, the centralization of R values is less than or equal to 2.0.

2. The lithium-ion battery according to claim 1, wherein the centralization of R values of the negative electrode active material is less than or equal to 1.7.

3. The lithium-ion battery according to any one of claims 1-2, wherein the coating layer comprises hard carbon.

4. The lithium-ion battery according to any one of claims 1-3, wherein the R value R50, which corresponds to a cumulative distribution of 50%, of the negative electrode active material is 0.15-0.42.

5. The lithium-ion battery according to claim 4, wherein the R value R50, which corresponds to a cumulative distribution of 50%, of the negative electrode active material is 0.20-0.30.

6. The lithium-ion battery according to any one of claims 1-5, wherein
the R value R50, which corresponds to a cumulative distribution of 50%, of the inner core is less than the R value R50, which corresponds to a cumulative distribution of 50%, of the coating layer; and/or
the R value R50, which corresponds to a cumulative distribution of 50%, of the coating layer is 0.55-1.6; and/or
the R value R50, which corresponds to a cumulative distribution of 50%, of the inner core is 0.06-0.14; and/or
the centralization of R values of the coating layer is 0.06-0.33.

7. The lithium-ion battery according to claim 6, wherein
the R value R50, which corresponds to a cumulative distribution of 50%, of the coating layer is 1.0-1.4; and/or
the R value R50, which corresponds to a cumulative distribution of 50%, of the inner core is 0.07-0.11; and/or
the centralization of R values of the coating layer is 0.13-0.25.

8. The lithium-ion battery according to any one of claims 1-7, wherein
the volume distribution particle size Dv50 of the negative electrode active material is 8µm-25µm; and/or
the difference value between the volume distribution particle size Dv50 of the negative electrode active material and the volume distribution particle size Dv50 of the inner core is 1.2µm-6µm; and/or
the mass of the coating layer is 0.3%-5% of the mass of the inner core; and/or
the inner core has the coating layer on 90%-100% of its surface.

9. The lithium-ion battery according to claim 8, wherein
the volume distribution particle size Dv50 of the negative electrode active material is 12µm-17µm; and/or
the difference value between the volume distribution particle size Dv50 of the negative electrode active material and the volume distribution particle size Dv50 of the inner core is 1.8µm-4.5µm; and/or
the mass of the coating layer is 1%-3.5% of the mass of the inner core; and/or
the inner core has the coating layer on 92%-100% of its surface.

10. The lithium-ion battery according to any one of claims 1-9, wherein
the graphite is artificial graphite; and/or
the graphite has a secondary particle morphology; and/or
the intensity ratio of the 004 crystal plane diffraction peak to the 110 crystal plane diffraction peak of the graphite measured by X-ray diffraction is 2-6.5; and/or
the gram capacity of the negative electrode active material is 354mAh/g-360mAh/g; and/or
the negative electrode active material has a powder compacted density of 1.63g/cm³-1.77 g/cm³ under a pressure of 20000N; and/or
the specific surface area of the negative electrode active material is 1.5m²/g-5m²/g.

11. The lithium-ion battery according to any one of claims 1-10, wherein the negative electrode film layer comprises a first negative electrode film layer and a second negative electrode film layer located between the first negative electrode film layer and the negative electrode current collector, the thickness of the first negative electrode film layer is 30%-60% of the thickness of the negative electrode film layer, the first negative electrode film layer comprises a first negative electrode active material, the second negative electrode film layer comprises a second negative electrode active material, and the first negative electrode active material comprises the negative electrode active material according to any one of claims 1-10.

12. The lithium-ion battery according to claim 11, wherein the second negative electrode active material comprises the negative electrode active material according to any one of claims 1-10, and the mass content w1 of the first negative electrode active material in the first negative electrode film layer is greater than the mass content w2 of the second negative electrode active material in the second negative electrode film layer; and/or the mass content w1 of the first negative electrode active material in the first negative electrode film layer is greater than or equal to 96.9%, and the mass content w2 of the second negative electrode active material in the second negative electrode film layer is less than 96.9%.

13. The lithium-ion battery according to claim 11, wherein the second negative electrode active material comprises graphite, the graphite has a secondary particle morphology, and the R value R50, which corresponds to a cumulative distribution of 50%, of the graphite is 0.06-0.14.

14. The lithium-ion battery according to claim 13, wherein the mass content w1 of the first negative electrode active material in the first negative electrode film layer is greater than the mass content w2 of the second negative electrode active material in the second negative electrode film layer; and/or the mass content w1 of the first negative electrode active material in the first negative electrode film layer is greater than or equal to 96.9%, and the mass content w2 of the second negative electrode active material in the second negative electrode film layer is less than 96.9%.

15. The lithium-ion battery according to any one of claims 1-14, wherein the compacted density of the negative electrode film layer is 1.60g/cm³-1.80g/cm³; and/or the thickness of the negative electrode film layer is 45µm-100µm.

16. The lithium-ion battery according to claim 15, wherein the compacted density of the negative electrode film layer is 1.65g/cm³-1.80g/cm³; and/or the thickness of the negative electrode film layer is 70µm-100µm.

17. An electrical apparatus, comprising the lithium-ion battery according to any one of claims 1-16, the lithium-ion battery being used to provide electric energy.

18. A negative electrode active material, wherein
the negative electrode active material comprises a inner core and a coating layer located on at least a part of the surface of the inner core, the inner core comprises graphite, and the coating layer comprises amorphous carbon;
in a cumulative distribution curve of R values of the negative electrode active material obtained under a surface scanning mode of a laser microscopic confocal Raman spectrometer, the centralization of R values is less than or equal to 2.0.

19. A method for preparing a negative electrode active material, comprising the following steps:
providing graphite;
subjecting the graphite and a liquid-phase coating agent to solid-liquid fusion;
carbonizing the product obtained after solid-liquid fusion under a protective gas atmosphere, so that the liquid-phase coating agent is carbonized into amorphous carbon and coats at least a part of the surface of the graphite to obtain a negative electrode active material,
the negative electrode active material comprises a inner core and a coating layer located on at least a part of the surface of the inner core, the inner core comprises graphite, and the coating layer comprises amorphous carbon;
in a cumulative distribution curve of R values of the negative electrode active material obtained under a surface scanning mode of a laser microscopic confocal Raman spectrometer, the centralization of R values is less than or equal to 2.0.

20. The preparation method according to claim 19, wherein the liquid-phase coating agent is a liquid-phase hard carbon coating agent.

21. The preparation method according to claim 20, wherein the liquid-phase hard carbon coating agent comprises a liquid resin, the viscosity of the liquid resin at 25°C is 150mPa·s-2500mPa·s, and the solid content of the liquid resin is 50%-88%.

22. The preparation method according to claim 21, wherein the viscosity of the liquid resin at 25°C is 300mPa·s-950mPa·s, and the solid content of the liquid resin is 60%-85%.

23. The preparation method according to any one of claims 21-22, wherein the liquid resin comprises at least one of liquid phenolic resin, liquid epoxy resin, liquid vinyl ester resin, liquid unsaturated polyester resin, liquid furan resin, and their respective derivatives.

24. The preparation method according to claim 23, wherein the liquid-phase hard carbon coating agent comprises liquid phenolic resin, the liquid phenolic resin has a weight average molecular weight of 300-900, a solid content of 60%-85%, a free phenol mass content of less than or equal to 9%, and a free aldehyde mass content of less than or equal to 0.5%.

25. The preparation method according to claim 24, wherein the liquid phenolic resin has a weight average molecular weight of 500-700, a solid content of 70%-78%, a free phenol mass content of less than or equal to 6.5%, and a free aldehyde mass content of 0.

26. The preparation method according to any one of claims 19-25, wherein the carbonization comprises a heating stage, a holding stage and a cooling stage,
the heating rate of the carbonization heating stage is 1.3°C/min-3°C/min; and/or
the cooling rate of the carbonization cooling stage is 1.2°C/min-3.7°C/min; and/or
the holding temperature of the carbonization holding stage is 900°C-1500°C; and/or
the holding time of the carbonization holding stage is 2h-10h.

27. The preparation method according to claim 26, wherein
the heating rate of the carbonization heating stage is 1.5°C/min-2.5°C/min; and/or
the cooling rate of the carbonization cooling stage is 1.5°C/min-2.7°C/min.

28. The preparation method according to any one of claims 19-27, wherein the device for solid-liquid fusion of the graphite and the liquid-phase coating agent is a fusion machine, and the stirring speed of the fusion machine is 300r/min-1000r/min; and/or the stirring time for solid-liquid fusion is 3min-8min.

29. A negative electrode plate, wherein
the negative electrode plate comprises a negative electrode current collector and a negative electrode film layer located on at least one surface of the negative electrode current collector, the negative electrode film layer comprises a negative electrode active material, the negative electrode active material comprises a inner core and a coating layer located on at least a part of the surface of the inner core, the inner core comprises graphite, and the coating layer comprises amorphous carbon;
in a cumulative distribution curve of R values of the negative electrode active material obtained under a surface scanning mode of a laser microscopic confocal Raman spectrometer, the centralization of R values is less than or equal to 2.0.
